# EUROPÄISCHE PATENTSCHRIFT

(11) **EP 3 752 970 B1**
(45) Veröffentlichungstag und Bekanntmachung des Hinweises auf die Patenterteilung: **13.05.2026**
(21) Anmeldenummer: 19710324.5
(22) Anmeldetag: 28.02.2019
(51) Int. Cl.: G06Q 30/018, H04L 9/40, H04W 12/00, H04L 9/00, H04L 9/32

(54) **COMPUTERIMPLEMENTIERTES VERFAHREN ZUM BEREITSTELLEN VON DATEN, INSBESONDERE FÜR EINE KONFORMITÄTSVERFOLGUNG**
COMPUTER-IMPLEMENTED METHOD FOR PROVIDING DATA, IN PARTICULAR FOR CONFORMITY TRACKING
PROCÉDÉ DE FOURNITURE DE DONNÉES MIS EN OEUVRE PAR ORDINATEUR, EN PARTICULIER POUR UN SUIVI DE CONFORMITÉ

(30) Priorität: 23.03.2018 EP 18163632
(43) Veröffentlichungstag der Anmeldung: 23.12.2020
(73) Patentinhaber: Siemens Energy Global GmbH & Co. KG, 81739 München (DE)
(72) Erfinder: RATHGEB, Andreas, 91099 Poxdorf (DE); UDAS, Manish, 89555 Steinheim am Albuch (DE)
(86) Internationale Anmeldenummer: PCT/EP2019/054967
(87) Internationale Veröffentlichungsnummer: WO 2019/179744

(56) Entgegenhaltungen:
- EP-A1- 2 037 340
- DE-A1- 102017 121 296
- US-A1- 2017 232 300
- CHALAEMWONGWAN NUTTHAKORN ET AL: "State of the art and challenges facing consensus protocols on blockchain", 2018 INTERNATIONAL CONFERENCE ON INFORMATION NETWORKING (ICOIN), IEEE, 10 January 2018 (2018-01-10), pages 957 - 962, XP033334708, DOI: 10.1109/ICOIN.2018.8343266
- GORANOVIC ANDRIJA ET AL: "Blockchain applications in microgrids an overview of current projects and concepts", IECON 2017 - 43RD ANNUAL CONFERENCE OF THE IEEE INDUSTRIAL ELECTRONICS SOCIETY, IEEE, 29 October 2017 (2017-10-29), pages 6153 - 6158, XP033280449, DOI: 10.1109/IECON.2017.8217069
- TIEN DINH ET AL: "Untangling Blockchain: A Data Processing View of Blockchain Systems", 17 August 2017 (2017-08-17), XP055482191, Retrieved from the Internet <URL:https://arxiv.org/pdf/1708.05665.pdf> [retrieved on 20180607]

## Beschreibung

Die Erfindung betrifft ein computerimplementiertes Verfahren zum Bereitstellen von Daten, insbesondere für eine Konformitätsverfolgung.

Produkte und Systeme können ein Gefährdungspotential beinhalten und unterliegen dann Richtlinien, Bestimmungen und Gesetzen, deren Einhaltung behördlich oder durch sogenannte notifizierte Stellen überwacht wird. Diese Überwachung kann das Design, die Herstellung, die Dokumentation, Montage, Inbetriebnahme, den Betrieb und die Entsorgung bzw.

Demontage, also den gesamten Lebenszyklus des Systems oder Produktes betreffen.

Der Gesetzgeber schreibt hierfür einen Prüf- und Zertifizierungsprozess vor, der durch Konformitätsbewertungsstellen mit entsprechender Kompetenz durchgeführt wird.

Aus der DE 10 2017 121 296 A1 ist eine Testumgebung für Automationsaufgaben bekannt, zur Erzeugung von Testsignalen und Ergebnisdokumentation.

Aus der EP 2 037 340 A1 ist ein Sicherheitsschaltgerät mit einem Testmodul bekannt, das durch eine Steuereinrichtung steuerbar ist. Die Steuereinrichtung ist durch einen Testprozess überprüfbar, wobei generierte Testergebnisses ausgewertet werden.

In den Druckschriften XP033334708, XP033280449, XP055482191 werden Blockchain Technologien mit Konsensusverfahren offenbart.

Je nach Branche, Anlage, System oder Produkt werden im Zuge des Entwurfs oder der Planung überwachungsrelevante Bereiche oder Teile identifiziert und die gültigen Anforderungen aus Normen, Richtlinien, Bestimmungen und Gesetzen benannt.

Basic- und Detail-Design werden entsprechend ausgeführt, dokumentiert, geprüft und zur Ausführung freigegeben.

Während und nach Abschluss der Bauphase wird das realisierte technische System / der Produktprototyp gegen die freigegebene Planung geprüft und entsprechend dem Prüfergebnis zur Inbetriebnahme bzw. zum Inverkehrbringen freigegeben (Erklärung der Konformität, Betriebserlaubnis).

Zur Aufrechterhaltung des konformen Betriebs werden, soweit erforderlich, wiederkehrende oder stichprobenhafte Prüfungen (z.B. zur Anlagen- oder Produkt-Sicherheit) durchgeführt und dokumentiert. Ebenso werden fachgerechte Demontage und Entsorgungsnachweise zum Ende der Lebensdauer notwendig und entsprechend dokumentiert.

Bei Prozessanlagen liegt so z.B. für jede Phase des Systemlebenslaufs eine Dokumentation der jeweiligen Phase vor.

Diese Vorgehensweise liegt in der Verantwortung des Herstellers bzw. Betreibers und seiner Beauftragten.

Ein Verlust dieser Dokumentation bzw. von Teilen der Dokumentation kann zum Entzug der Betriebserlaubnis, zu Rückrufaktionen, zum Neubau, zum Stillstand der Anlage und damit zu hohen Verlusten führen. Die Nichteinhaltung von Richtlinien und Gesetzen kann ggfs. auch Haftstrafen zur Folge haben.

Die Dokumentation zur Einhaltung aller Gesetze und Richtlinien mit den zugehörigen Prüfzertifikaten ist zum gegenwärtigen Zeitpunkt eine umfangreiche und komplexe Aufgabe, die mit mindestens 3 Parteien (Hersteller, Prüfer, Betreiber) und zahlreichen qualifizierten Personen umgesetzt wird. Die Dokumentation muss für viele Jahrzehnte archiviert, aber auch revisioniert werden, um zu jedem Zeitpunkt, z.B. im Falle eines Audits oder eines Betriebsunfalls, verfügbar zu sein. Alle Ursachenanalysen, Korrekturmaßnahmen und insbesondere Haftungsfragen müssen die hier enthaltenen aktuellen Informationen einbeziehen.

Bis zum gegenwärtigen Zeitpunkt erfolgt der Nachweis und die Dokumentation durch manuelle und papiergetriebene Prozesse. Die entstehende Papierdokumentation mit Prüfstempeln und Paraphen ist umfangreich, aufwendig, langsam und unflexibel.

Die Verwendung von physischen Stempeln zur Freigabe von Dokumenten ist mangelhaft, fälschungsunsicher und nicht automatisierbar.

Die Abnahme von z.B. fehlersicheren Steuerungen, die bereits digitale Prüfsummen in verifizierten digitalen Systemen bereitstellen, erfolgt auf Basis von einer Papierdokumentation.

Die Verwendung von traditionellen Dokumentenformaten verhindert eine Automatisierung und zwingt zur Bearbeitung von größeren Einheiten. Eine flexible granulare und modulare Bearbeitung von Teilsystemen bzw. der Austausch von einzelnen Produkten eines größeren Systems erfordert stets die Revision größerer Systeme mit entsprechendem Aufwand.

Die Herstellung von mehreren Originalen ist aufwändig bei Verteilung und Archivierung, die über viele Jahrzehnte hohen Verwaltungsaufwand erzeugen.

Es ist daher Aufgabe der Erfindung, hier Abhilfe zu schaffen. Die Aufgabe wird gelöst durch ein computerimplementiertes Verfahren zum Bereitstellen von Daten, mit den Merkmalen des Anspruchs 1.

Vorteilhafte oder bevorzugte Ausführungsformen sind jeweils Gegenstand der abhängigen Ansprüche 2-9.

Die Instanzen können verschiedenen Beteiligten zugeordnet sein, wie z.B. einem Lieferant, einem Anlagenbauer, einem Qualitätsmanager und einer notifizierende Stelle. Die erste Instanz ist diejenige Instanz, die durch Bilden eines ersten Datenblocks eine Blockchain startet. Durch die Verwendung von proof-of-authority Nachweisen wird im Gegensatz zu einer Legitimation durch proof-of-work die erforderliche Rechenleistung reduziert und es ist zugleich möglich, im Vergleich schneller die Blockchain durch Hinzufügen neuer Datenblöcke zu aktualisieren. Dabei verleiht ein proof-of-authority Nachweis einer Instanz die Kompetenz, Transaktionen zu validieren (z.B. durch sogenannte Validatoren) und in Blöcke zu fassen. Die proof-of-authority Nachweise können von der ersten Instanz bereitgestellt werden. Alternativ oder zusätzlich kann aber auch vorgesehen sein, dass die weiteren Instanzen proof-of-authority Nachweise bereitstellen können.

Das Prüfen des proof-of-authority Nachweises umfasst dabei das Übermitteln des an die Blockchain hinzufügenden Datenblocks zusammen mit dem proof-of-authority Nachweis an die anderen Instanzen, die den proof-of-authority Nachweis überprüfen und bei erfolgreicher Prüfung eine Freigabe erteilen, den Datenblock an die Blockchain hinzuzufügen. Für die Freigabe kann ein Kriterium vorgegeben sein, z.B. dass die Hälfte der Instanzen eine Freigabe erteilt.

Durch das erfindungsgemäße Verfahren werden folgende Vorteile erreicht:
1. Unfälschbarkeit: Die Aufgrund der Architektur der Blockchain implizite Unfälschbarkeit ermöglicht die Digitalisierung von Zertifizierungsstempeln.
2. Qualität: Menschliche Fehler werden aufgrund der Übertragung der Arbeitsabläufe in digitale Prozesse und deren Automatisierung minimiert.
3. Integrität in der Zusammenarbeit: Hohes Vertrauen zwischen den agierenden Beteiligten wird durch das hohe Niveau der Autorisierung des Zugriffs und in Bezug auf die Unfälschbarkeit der gespeicherten Daten hergestellt.
4. Verfügbarkeit und Zugriffsgeschwindigkeit auf Daten:
   Die Digitalisierung in einer verteilten, automatisch replizierten Datenbank erreicht für diese Daten eine bisher unerreichte Geschwindigkeit.
5. Transparenz und Auditierbarkeit: Die Strukturierung und Modularisierung der Daten in digitalen Prozessen ermöglicht besseres Verständnis bezüglich Inhalt und Ablauf. Die Auditierbarkeit wird vereinfacht und das Anlagenrisiko kalkulierbar und reduziert. Die Versicherungsprämien des Betreibers fallen.
6. Beschleunigung: Planung, Bau und Inbetriebnahme können erheblich beschleunigt werden, Dokumentenversand und örtliche Abnahmen entfallen. Die Veranlassung von Maßnahmen zum Erhalt der Produktion ist unmittelbar möglich.
7. Aufwands- und Kostenreduktion: Automatisierung innerhalb der Blockchain bietet zusätzliche Effizienzsteigerung in den Workflows für alle Parteien.

Ferner kann aufgrund der Beibehaltung des Grundzertifizierungsablaufs (Prüfung der Daten durch Prüfer bzw. notifizierte Stelle) und einer hochwertigen Authentifizierung die Auswirkung eines Angriffs auf die Mensch-Maschinen-Schnittstelle gut erkannt und damit begrenzt werden.

Durch die vollständige Digitalisierung lassen sich zwischen den Beteiligten nun auch nicht dokumentenartige Daten austauschen. Dies bedeutet, das Datenformate proprietärer Software ausgetauscht und z.B. Prüfzwecken zugeführt werden können. Beispielsweise kann das erstellte Programm einer fehlersicheren Steuerung als proprietäre Simatic-Datei einschließlich der zugehörigen Prüfsumme an den TÜV übermittelt werden, der diese Datei dann z.B. in einer Prüfsimulation auf Fehler prüfen kann ohne seine Prüfmechanismen und Werkzeuge zu veröffentlichen. Dies erhöht die Qualität der Prüfung und damit auch der Anlagensicherheit.

Durch die Vereinbarung und Verwendung von herstellerneutralen Datenformaten kann diese Funktion erheblich vereinfacht werden.

Zusätzlich kann auch eine traditionelle Dokumentation in Form von PDF-Dokumenten o.ä. in der Blockchain abgelegt werden, so dass eine traditionelle Papierdokumentation z.B. bei relevanten Meilensteinen (design freeze, Bauabnahme, vorläufige Übernahme, usw.) aus der Blockchain erzeugt werden kann.

Dabei werden unter Smart Contracts Verträge auf Software-Basis verstanden, bei denen unterschiedlichste Vertragsbedingungen hinterlegt werden können. Während des Vertragsverlaufs können bestimmte verknüpfte Aktionen (z.B. Auszahlungen) selbsttätig ausgeführt werden, wenn ein entsprechender Auslöser (z.B. Erfüllung von Vertragsbedingungen) vorliegt. So kann z.B. die Blockchain dazu genutzt werden, Fehlerbehandlungsmaßnahmen bereitzustellen. Wenn bei einer Komponente einer Anlage, wie z.B. einem Feldgerät, ein Fehler auftritt, triggert das dazu korrespondierende Fehlersignal den als Smart Contract ausgebildeten Datenblock, so dass dann eine entsprechende Maßnahme zur Fehlerbehandlung, wie Deaktivierung des defekten Feldgeräts und Benachrichtigung zum Austausch, umgesetzt werden.

Für eine transparente und weltweit akzeptierte Anwendung der beschriebenen Technologie können Smart Contracts soweit möglich als quelloffener Source-Code veröffentlicht werden. Die Veröffentlichung (git-hub) dient der Einsicht, Prüfung und Verbesserung der Technologie und damit auch der Sicherheit von Produkten und Systemen. Durch die Bereitstellung des Source-Codes einschließlich der zugehörigen Prüfsumme des kompilierten Smart Contracts kann zu jeder Zeit die Verwendung der Smart Contracts in einer Blockchain durch die Anwender verifiziert werden, so dass Streitfälle reduziert werden können.

So werden folgende Vorteile erreicht:
1. Neue automatisierte Schutzwirkung: Durch die Verknüpfung des in der Blockchain online aktuellen Konformitätsstatus können neue autonome Schutzwirkungen im Betrieb der Anlage (z.B. Anregung des Anlagenstillstands) ausgelöst werden, die auch Management-Aspekte der Sicherheit einbeziehen.
2. Selbst-Dokumentation: Durch die Integration von produktspezifischen Smart Contracts können sicherheitsgerichtete Eigenschaften in Planung und Ausführung dokumentiert und geprüft werden (z.B. im Konfigurationsmanagement gemäß safety integrity level SIL)
3. Neue Dienstleistungen im Bereich Anlagensicherheit und Konformität: Die Technologie ermöglicht neue digitale Dienstleistungen im Bereich der Produkt- und Systemsicherheit, die mit dieser Plattform realisiert werden können.

Gemäß einer Ausführungsform fordert das Testauslösesignal ein Testsignal an. Mit anderen Worten, der Smart Contract bewirkt, dass innerhalb einer vorbestimmten Zeitdauer ein Testsignal erzeugt wird. So wird die Testauslösung automatisiert.

Gemäß einer weiteren Ausführungsform wird ein Testsignal von dem Smart Contract bereitgestellt. Es wird also von dem Smart Contract selbst das Testsignal erzeugt. Es bedarf also keines weiteren Eingriffs, um z.B. manuell ein Testsignal auszulösen. Vielmehr wird das Testsignal automatisch erzeugt.

Gemäß einer weiteren Ausführungsform stellt der Smart Contract ein Rücksetzsignal bereit. Somit wird erreicht, dass auf einen erfolgreichen Test hin das System wieder in einen Zustand versetzt wird, der dem Zustand vor dem Test entspricht.

Gemäß einer weiteren Ausführungsform stellt der Smart Contract ein Rückmeldesignal bereit. Somit wird durch das Rückmeldesignal die Blockchain aktualisiert und der erfolgreich bestandene Test archiviert und publiziert.

Gemäß einer weiteren Ausführungsform ist das peer-to-peer Netz ein privates Netz. Somit handelt es sich bei der Blockchain um eine Federated Blockchain or Consortium Blockchain, also um eine nicht-öffentliche Blockchain.

Gemäß einer weiteren Ausführungsform hat der proof-of-authority Nachweis zumindest eine zeitlich begrenzte Gültigkeitsdauer. Dabei wird unter einer zeitlich begrenzten Gültigkeit verstanden, dass die proof-of-authority Nachweise ein Verfallsdatum aufweisen und nach Überschreiten des Verfallsdatums eine der weiteren Instanzen nicht mehr in die Lage versetzen, weitere Datenblöcke zu der Blockchain hinzuzufügen. So kann z.B. der Umstand abgebildet werden, dass ein Nachweis einer Prüfung innerhalb einer vorbestimmten Zeitspanne erbracht werden muss. Ferner wird so einem Missbrauch entgegengewirkt, da die proof-of-authority Nachweise keine unbegrenzte Lebensdauer haben.

Gemäß einer weiteren Ausführungsform hat der proof-of-authority Nachweis zumindest eine inhaltliche Gültigkeit. Unter einer inhaltlichen Gültigkeit wird verstanden, dass die proof-of-authority Nachweise nur dazu berechtigen, dass vorbestimmte Eingaben gemacht werden können, wie z.B. die Bestätigung, dass eine Prüfung durchgeführt wurde. Mit anderen Worten, die proof-of-authority Nachweise sind sachgebunden. Auch so kann einem Missbrauch entgegengewirkt werden.

Gemäß einer weiteren Ausführungsform hat der proof-of-authority Nachweis zumindest eine nutzerbezogene Gültigkeit. Unter einer nutzerbezogenen Gültigkeit wird verstanden, dass die proof-of-authority Nachweise nur eine jeweilige, vorbestimmte Instanz dazu berechtigen, dass vorbestimmte Eingaben gemacht werden können, wie z.B. die Bestätigung, dass eine Prüfung durchgeführt wurde. Mit anderen Worten, die proof-of-authority Nachweise sind individualisiert bzw. nutzerbezogen.

Gemäß einer weiteren Ausführungsform ist einer der Datenblöcke als Smart Contract ausgebildet, der auf Vorliegen einer vorbestimmten Bedingung einen proof-of-authority Nachweis bereitstellt. So kann z.B. einer der Datenblöcke dazu ausgebildet sein auf Vorliegen einer vorbestimmten Bedingung einen proof-of-authority Nachweis bereitzustellen. Somit erzeugt nicht nur die erste Instanz die proof-of-authority Nachweise, sondern die jeweiligen proof-of-authority Nachweise werden erst erzeugt und bereitgestellt, wenn die vorbestimmten Bedingungen eines Vorgängerschritts, wie z.B. ein Nachweis von Zwischentests oder Vorprüfungen, nachgewiesen wurden durch Eintrag in die Blockchain. Somit entfällt, proof-of-authority Nachweise zu Beginn "auf Vorrat" zu erzeugen und sicher vor unbefugten Zugriff zu archivieren, was die Sicherheit erhöht.

Gemäß einer weiteren Ausführungsform ist eine Heilungsfunktion zum Ändern und/oder Kennzeichnen von zumindest einem Datenblock vorgesehen. Hierzu kann ein Smart Contract vorgesehen sein, der auf eine explizite Zustimmung aller Beteiligten hin Fehler oder falsche Daten benennt oder kenntlich macht. Beispielsweise kann damit dann eine Interpretation bei falschen Inhalten ermöglicht werden.

Ferner gehören zur Erfindung ein derartiges System und Computerprogrammprodukte. Ein erstes Computerprogrammprodukt kann für eine erste Instanz vorgesehen sein, während ein zweites Computerprogrammprodukt für die weiteren Instanzen vorgesehen ist. Bei einem dritten Computerprogrammprodukt kann es sich um einen Smart Contract handeln, der auf Vorliegen eines vorbestimmten Fehlerfalls eine Fehlerbehandlungsmaßnahme bereitstellt und/oder auf Vorliegen eines Testauslösesignal eine Funktionsprüfung auslöst.

Gemäß einem weiteren Aspekt betrifft die Erfindung ein computerimplementiertes Verfahren zur Prüfung eines technischen Systems, insbesondere für eine Konformitätsverfolgung mit den Schritten:
- Laden und/oder Ausführen einer Teststeuerungstransaktion, wobei
   ∘ insbesondere die Teststeuerungstransaktion aus einer Netzwerk-Applikation geladen wird,
   ∘ die Teststeuerungstransaktion Steuerbefehle und Referenzdaten umfasst;
- Steuern eines Testmoduls, wobei
   ∘ die Steuerbefehle das Testmodul derart ansteuern, dass ein Testsignal für ein Subsystem des technischen Systems erzeugt wird;
- Erfassen von Messdaten für das Subsystem als Reaktion auf das Testsignal, wobei
   ∘ die Messdaten durch das Testmodul erfasst werden,
   ∘ insbesondere die Messdaten durch einen Sensor des Testmoduls erfasst werden;
- Berechnen eines Prüfergebnisses anhand der Messdaten und der Referenzdaten;
- Steuern des technischen Systems abhängig von dem Prüfergebnis und/oder Ausführen einer Steuerfunktion abhängig von dem Prüfergebnis.

Gemäß einer weiteren Ausführungsform fordert ein Testauslösesignal (37) das Laden und/oder Ausführen der Teststeuerungstransaktion an.

Gemäß einer weiteren Ausführungsform werden die Aktivitäten des Systems und/oder des Testmoduls aufgezeichnet und in einer Protokolldatei oder einem Datensatz oder in Transaktionen gespeichert.

Gemäß einer weiteren Ausführungsform ist die Teststeuerungstransaktion einen Smart-Contract umfasst oder ein Smart-Contract ist.

Gemäß einer weiteren Ausführungsform wird abhängig von dem Prüfergebnis ein Rücksetzsignal (42) für das Subsystem bereitgestellt oder die Steuerfunktion stellt abhängig von dem Prüfergebnis ein Rücksetzsignal (42) für das Subsystem bereit.

Gemäß einer weiteren Ausführungsform wird abhängig von dem Prüfergebnis ein Rückmeldesignal (40) für das Subsystem bereitgestellt wird oder die Steuerfunktion stellt abhängig von dem Prüfergebnis ein Rückmeldesignal (40) für das Subsystem bereit.

Gemäß einer weiteren Ausführungsform wird beispielsweise das Prüfergebnis in einer Bestätigungstransaktion gespeichert.

Alternativ oder zusätzlich werden beispielsweise die Messdaten in einer Messdatentransaktion gespeichert.

Alternativ oder zusätzlich wird beispielsweise das Prüfergebnis anhand der Messdaten der Messdatentransaktion berechnet. Alternativ oder zusätzlich sind/ist beispielsweise die Bestätigungstransaktion und/oder die Messdatentransaktion und/oder Teststeuerungstransaktion mittels eines jeweiligen proof-of-authority Nachweises gesichert. Beispielsweise ist die Bestätigungstransaktion und/oder die Messdatentransaktion mittels eines proof-of-authority Nachweises des technischen Systems, des Subsystems oder des Anlagenbetreibers gesichert. Beispielsweise ist die Teststeuerungstransaktion mittels eines proof-of-authority Nachweises einer Entität, einer vertrauenswürdigen Entität (z. B. Tüv) oder eines Dritten gesichert. Alternativ oder zusätzlich sind beispielsweise die Bestätigungstransaktion und/oder die Messdatentransaktion und/oder Teststeuerungstransaktion in einem jeweiligen Datenblock gespeichert. Alternativ oder zusätzlich werden beispielsweise Zusatz-/Metadaten zur Prüfung in einer Bestätigungstransaktion gespeichert. Alternativ oder zusätzlich umfasst beispielsweise der jeweilige Datenblock den jeweiligen proof-of-authority Nachweis der entsprechenden Transaktion.

Gemäß einer weiteren Ausführungsform wird die Netzwerk-Applikation in einem peer-to-peer Netz (1) ausgeführt oder durch das peer-to-peer Netz (1) ausgeführt, wobei insbesondere das peer-to-peer Netz (1) ein privates Netz ist.

Gemäß einer weiteren Ausführungsform hat der proof-of-authority Nachweis (10) zumindest eine zeitlich begrenzte Gültigkeitsdauer.

Gemäß einer weiteren Ausführungsform hat der proof-of-authority Nachweis (10) zumindest eine inhaltliche Gültigkeit hat.

Gemäß einer weiteren Ausführungsform hat der proof-of-authority Nachweis (10) zumindest eine nutzerbezogene Gültigkeit hat.

Gemäß einer weiteren Ausführungsform ist ein Datenblock (4a, 4b, 4c) als Smart Contract ausgebildet, der auf Vorliegen einer vorbestimmten Bedingung den proof-of-authority Nachweis (10) bereitstellt.

Gemäß einer weiteren Ausführungsform ist eine Heilungsfunktion zum Ändern und/oder Kennzeichnen von zumindest einem der Datenblöcke (4a, 4b, 4c) vorgesehen.

Gemäß einem weiteren Aspekt betifft die Erfindung ein System zum Bereitstellen von Daten, umfassend Mittel zur Ausführung der Schritte des Verfahrens nach einem der Ansprüche 1 bis 12.

Gemäß einem weiteren Aspekt betifft die Erfindung eine Vorrichtung oder ein System zur Prüfung eines/des technischen Systems, insbesondere für eine Konformitätsverfolgung, aufweisend:
- beispielsweise ein Lademodul, wobei
   ∘ beispielsweise das Lademodul zum Laden und/oder Ausführen einer Teststeuerungstransaktion eingerichtet ist,
   ∘ beispielsweise die Teststeuerungstransaktion aus einer Netzwerk-Applikation geladen wird,
   ∘ beispielsweise die Teststeuerungstransaktion Steuerbefehle und Referenzdaten umfasst;
- beispielsweise ein Testmodul, wobei
   ∘ beispielsweise das Testmodul dazu eingerichtet ist mittels der Steuerbefehle gesteuert zu werden,
   ∘ beispielsweise die Steuerbefehle das Testmodul derart ansteuern, dass ein Testsignal für ein Subsystem des technischen Systems erzeugt wird;
- beispielsweise ein Erfassungsmodul, wobei
   ∘ beispielsweise das Erfassungsmodul zum Erfassen von Messdaten für das Subsystem als Reaktion auf das Testsignal eingerichtet ist,
   ∘ beispielsweise die Messdaten durch das Testmodul erfasst werden,
   ∘ beispielsweise die Messdaten durch einen Sensor des Testmoduls erfasst werden;
   ∘ beispielsweise das Erfassungsmodul der Sensor ist;
- beispielsweise ein Berechnungsmodul, wobei beispielsweise das Berechnungsmodul zum Berechnen eines Prüfergebnisses anhand der Messdaten und der Referenzdaten eingerichtet ist;
- beispielsweise ein Steuermodul, wobei beispielsweise das Steuermodul zum Steuern des technischen Systems abhängig von dem Prüfergebnis und/oder Ausführen einer Steuerfunktion abhängig von dem Prüfergebnis eingerichtet ist.

Gemäß einem weiteren Aspekt betifft die Erfindung ein Computerprogrammprodukt, umfassend Befehle, die bei der Ausführung des Programms durch einen Computer diesen veranlassen, zumindest einen der Schritte der Ansprüche 1 bis 12 auszuführen, wobei der Computer der ersten Instanz (5a) zugeordnet ist.

Gemäß einem weiteren Aspekt betifft die Erfindung ein Computerprogrammprodukt, umfassend Befehle, die bei der Ausführung des Programms durch einen Computer diesen veranlassen, zumindest einen der Schritte der Ansprüche 1 bis 12 auszuführen, wobei der Computer einer der weiteren Instanzen (5b, 5ca) zugeordnet ist.

Die Technologie von Blockketten (engl. Blockchains) bzw. "Distributed Ledgers" ist aktuell eine intensiv diskutierte Technologie, die insbesondere als verteiltes Datenbanksystem oder als Netzwerk-Applikation realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems und/oder einer Netzwerk-Applikation sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweiten Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) oder der Netzwerk-Applikation verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems (oder der Netzwerk-Applikation) oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems (oder der Netzwerk-Applikation) prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks, für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

In der Erfindung werden beispielsweise Prüfsummen (z. B. Transaktionsprüfsummen) über vorstandardisierte oder vorgegebene sicherheitsgerichtete Funktionen (z. B. zum Testen des Subsystems oder einer Funktion oder Sicherheitsfunktion des Subsystems). Solche sicherheitsgerichtete Funktionen sind z. B. über die Anlagen (z. B. das technische System) hinweg gleich und werden vorzugsweise anlagenspezifisch adaptiert. Bei einer anlagenspezifischen Anpassung ergibt sich z. B. für eine entsprechende adaptierte sicherheitsgerichtete Funktion sich eine neue Prüfsumme der Funktion. Die adaptierte sicherheitsgerichtete Funktion und/oder die zugehörige Prüfsumme wird beispielsweise über die Anlagenlebensdauer hin verwendet und/oder als Referenz für Änderungen verwendet. Beispielsweise wird mittels des Merkle-Tree und seiner Struktur, die Struktur der Anlage und/oder sicherheitsgerichteten Funktionen abgebildet.

Unter einer "Verkettungsprüfsumme" kann im Zusammenhang mit der Erfindung eine Prüfsumme verstanden werden, die insbesondere einen jeweiligen Datenblock des verteilten Datenbanksystems (oder der Netzwerk-Applikation) den vorhergehenden Datenblock des verteilten Datenbanksystems (oder der Netzwerk-Applikation) angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems oder der Netzwerk-Applikation) verwendet werden, um einen neuen Datenblock mit einem (vorhandenen) Datenblock des verteilten Datenbanksystems (oder der Netzwerk-Applikation) zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems (oder der Netzwerk-Applikation) umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann (um z. B. im ungeschützten Teil noch personenbezogene Daten zu speichern). Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems (oder der Netzwerk-Applikation) sein, eine Transaktionsprüfsumme eines Datenblocks mit den entsprechenden Daten (des verteilten Datenbanksystems/der Netzwerk-Applikation oder einer anderen Datenbank) oder eine Datenprüfsumme, die über die Daten gebildet wurde.

Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank/Netzwerk-Applikation, welche die Daten umfasst) umfassen. Die entsprechenden Daten könnten dann beispielsweise auch in einer weiteren Transaktion eines weiteren Datenblocks des verteilten Datenbanksystems/der Netzwerk-Applikation bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems/der Netzwerk-Applikation möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems (oder der Netzwerk-Applikation) für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems/einer Netzwerk-Applikation" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems (oder der Netzwerk-Applikation) verweisen bzw. diese referenzieren [1][4][5].

Unter "Einfügen in das verteilte Datenbanksystem/die Netzwerk-Applikation" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems/einer Netzwerk-Applikation übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems/der Netzwerk-Applikation verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems (oder der Netzwerk-Applikation) verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Datenblocks einer Blockkette (engl. Blockchain) verstanden werden.

Eine Transaktion kann insbesondere einen Programmcode umfassen, der beispielsweise einen Smart Contract realisiert. Beispielsweise kann im Zusammenhang mit der Erfindung unter Transaktion auch eine Steuertransaktion und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.).

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems/der Netzwerk-Applikation) oder die entsprechende Transaktion des verteilten Datenbanksystems/der Netzwerk-Applikation) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem/die Netzwerk-Applikation" erläutert ist.

Unter einem "Programmcode" (z. B. ein Smart-Contract oder Chain-Code) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem/die Netzwerk-Applikation ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turingvollständig sind. Der Programmcode wird vorzugsweise durch die Infrastruktur des verteilten Datenbanksystems/der Netzwerk-Applikation ausgeführt [4][5]. Dabei wird beispielsweise eine virtuelle Maschine durch die Infrastruktur des verteilten Datenbanksystems (oder der Netzwerk-Applikation) realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems/der Netzwerk-Applikation (z. B. eine Blockkette) gespeichert, beispielsweise in einem Datenblock des verteilten Datenbanksystems (oder der Netzwerk-Applikation). Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem/der Netzwerk-Applikation verstanden werden, wobei beispielsweise die entsprechende Infrastruktur des verteilten Datenbanksystems/der Netzwerk-Applikation den Programmcode ausführt.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einer "Netzwerk-Applikation", kann im Zusammenhang mit der Erfindung beispielsweise eine dezentral verteilte Datenbank, ein verteiltes Datenbanksystem, eine verteilte Datenbank, eine Peer-2-Peer Applikation, ein verteiltes Speicherverwaltungssystem, eine Blockkette (engl. Blockchain), ein distributed Ledger, ein verteiltes Speichersystem, ein distributed ledger technology (DLT) based system (DLTS) , ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" oder einer "Netzwerk-Applikation" kann beispielsweise auch ein verteiltes Datenbanksystem oder eine Netzwerk-Applikation verstanden werden, von dem/der zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Dies bedeutet insbesondere, dass (alle) Kanten (immer) die gleiche Richtung haben, ähnlich wie dies z. B. bei Zeit ist. Mit anderen Worten ist es insbesondere nicht möglich rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem/der Netzwerk-Applikation kann es sich beispielsweise um ein öffentliches verteiltes Datenbanksystem/eine ein öffentliche Netzwerk-Applikation (z. B. eine öffentliche Blockkette) oder ein geschlossenes (oder privates) verteiltes Datenbanksystem/eine geschlossene Netzwerk-Applikation (z. B. eine private Blockkette) handeln.

Handelt es sich beispielsweise um ein öffentliches verteiltes Datenbanksystem/eine ein öffentliche Netzwerk-Applikation, bedeutet dies, dass neue Knoten und/oder Geräte ohne Berechtigungsnachweise oder ohne Authentifizierung oder ohne Anmeldeinformationen oder ohne Credentials dem verteilten Datenbanksystem/der Netzwerk-Applikation beitreten können bzw. von diesem akzeptiert werden. Insbesondere können in einem solchen Fall die Betreiber der Knoten und/oder Geräte anonym bleiben.

Handelt es sich bei dem verteilten Datenbanksystem/der Netzwerk-Applikation beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem/der Netzwerk-Applikation beitreten können bzw. von diesem akzeptiert zu werden.

Bei einem verteilten Datenbanksystem/der Netzwerk-Applikation kann es sich beispielsweise auch um ein verteiltes Kommunikationssystem zum Datenaustausch handeln. Dies kann beispielsweise ein Netzwerk oder ein Peer-2-Peer Netzwerk sein.

Bei einem/dem verteilten Datenbanksystem kann es sich beispielsweise auch um ein dezentrales verteiltes Datenbanksystem und/oder ein dezentrales verteiltes Kommunikationssystem handeln.

Bei einer "Netzwerk-Applikation" kann es sich beispielsweise auch um eine Netzwerk-Applikationsinfrastruktur handeln oder die Netzwerk-Applikation umfasst eine entsprechende Netzwerk-Applikationsinfrastruktur. Diese Infrastruktur kann beispielsweise Knoten und/oder Kommunikationsnetze und/oder Datenschnittstelle und/oder weitere Komponenten umfassen, um die Netzwerk-Applikation zu realisieren oder auszuführen. Bei der Netzwerk-Applikation kann z. B. um eine verteilte Netzwerk-Applikation (z. B. eine verteilte Peer-2-Peer Applikation oder ein verteiltes Datenbanksystem) handeln, die beispielsweise auf mehreren Knoten der Netzwerk-Applikationsinfrastruktur ausgeführt wird.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems/einer Netzwerk-Applikation (z. B. eine Blockkette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Blockheader), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem/der Netzwerk-Applikation gespeichert sind. Damit lassen sich beispielsweise blocklose (engl. blockless) verteilte Datenbanksysteme/Netzwerk-Applikationen, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems/der Netzwerk-Applikation) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem/der Netzwerk-Applikation in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems/der Netzwerk-Applikation" kann im Zusammenhang mit der Erfindung beispielsweise der Datenblock des verteilten Datenbanksystems/der Netzwerk-Applikation verstanden werden, der insbesondere einem (bestimmten) Datenblock direkt vorhergeht. Alternativ können unter "vorhergehender Datenblöcke eines (bestimmten) Datenblockes des verteilten Datenbanksystems/der Netzwerk-Applikation" insbesondere auch alle Datenblöcke des verteilten Datenbanksystems/der Netzwerk-Applikation verstanden werden, die dem bestimmten Datenblock vorhergehen. Hierdurch kann beispielsweise die Verkettungsprüfsumme oder die Transaktionsprüfsumme insbesondere nur über das dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems/der Netzwerk-Applikation" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem/der Netzwerk-Applikation (z. B. eine Blockkette) durchführen [1][4][5]. Solche Knoten können beispielsweise Transaktionen eines verteilten Datenbanksystems/einer Netzwerk-Applikation bzw. deren Datenblöcke ausführen oder neue Datenblöcke mit neuen Transaktionen in das verteilte Datenbanksystem/die Netzwerk-Applikation mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem/der Netzwerk-Applikation, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems/der Netzwerk-Applikation sind. Dabei können die Geräte beispielsweise Feldgeräte sein oder Geräte im Internet der Dinge sein, die insbesondere auch ein Knoten des verteilten Datenbanksystems/der Netzwerk-Applikation sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Blockketten-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer des verteilten Datenbanksystems/der Netzwerk-Applikation (z. B. der Blockkette) sind (also keine Operationen mit dem verteilten Datenbanksystem/der Netzwerk-Applikation durchführen oder diese nur abfragen, ohne jedoch Transaktionen durchzuführen, Datenblöcke einfügen oder Proof-of-Work-Nachweise berechnen), verstanden werden. Alternativ kann insbesondere auch unter einem Rechner ein Knoten des verteilten Datenbanksystems/der Netzwerk-Applikation verstanden werden. Mit anderen Worten kann insbesondere unter einem Gerät ein Knoten des verteilten Datenbanksystems/der Netzwerk-Applikation verstanden werden oder auch ein Gerät außerhalb der Blockkette bzw. des verteilten Datenbanksystems/der Netzwerk-Applikation verstanden werden. Ein Gerät außerhalb des verteilten Datenbanksystems/der Netzwerk-Applikation kann beispielsweise auf die Daten (z. B. Transaktionen oder Steuertransaktionen) des verteilten Datenbanksystems/der Netzwerk-Applikation zugreift und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems/der Netzwerk-Applikation) durch einen Knoten realisiert, kann dies z. B. mittels eines Smart-Contracts erfolgen, der insbesondere in einer Transaktion des verteilten Datenbanksystems/der Netzwerk-Applikation gespeichert ist. Ein Rechner oder ein Gerät kann beispielsweise auch ein Teil der Infrastruktur sein, die z. B. die Netzwerk-Applikation oder das verteilte Datenbanksystem ausführt, realisiert oder umfasst.

Desweiteren kann unter den nachfolgenden Begriffen im Kontext der Erfindung beispielsweise folgendes verstanden werden.

Unter einer "fehlersichere Steuerung" (das z. B. auch als ein sicherheitsbezogenes System bezeichnet werden kann) (englisch safety-related system) kann beispielsweise ein System (z. B. nach DIN EN 61508-4:2002-11) verstanden werden, das sowohl die erforderlichen Sicherheitsfunktionen ausführt, die notwendig sind, um einen sicheren Zustand für die EUC zu erreichen oder aufrechtzuerhalten, als auch dazu vorgesehen ist, selbst oder mit anderen sicherheitsbezogenen Systemen und anderen risikomindernden Maßnahmen die notwendige Sicherheitsintegrität für die geforderten Sicherheitsfunktionen zu erreichen.

Eine fehlersichere Steuerung kann z. B. ein programmierbares elektronisches System zum Schutz oder zur Überwachung sein. Eine solche Steuerung kann z. B. ein oder mehrere programmierbare elektronische Geräte, z. B. einschliesslich einer, mehrerer oder aller Elemente des Systems, wie z .B. Energieversorgung, Sensoren und anderer Eingabegeräte, Datenverbindungen und anderer Kommunikationswege sowie Aktoren und anderer Ausgabeeinrichtungen umfassen.

Unter "EUC" (en: equipment under control) kann im Zusammenhang mit der Erfindung beispielsweise eine Einrichtung, Maschine, Apparat oder Anlage verstanden werden, die z. B. zur Fertigung, Stoffumformung, zum Transport, zu medizinischen oder anderen Tätigkeiten verwendet wird.

Unter einer "Sicherheitsfunktion" oder "Schutzkreis" (en: safety function) kann in Zusammenhang mit der Erfindung beispielsweise eine Funktion verstanden werden, die z. B. von einem sicherheitsbezogenen System oder anderen risikomindernden Maßnahmen ausgeführt wird, und dazu vorgesehen ist, unter Berücksichtigung eines festgelegten gefährlichen Vorfalls einen sicheren Zustand für die EUC zu erreichen oder aufrechtzuerhalten

Unter einer "Schutzlogik" (, die z. B. als sicherheitsbezogene Software (en: safety-related software) bezeichnet werden kann) kann im Zusammenhang mit der Erfindung beispielsweise eine Software und/oder ein Programmcode und/oder eine Applikations verstanden werden, die zur Durchführung von Sicherheitsfunktionen und/oder zusätzlich für die Durchführung von Prüffunktionen in einem sicherheitsbezogenen System und/oder in einer fehlersicheren Steuerung verwendet wird.

Unter einem "sicheren Zustand" (en: safe state) kann im Zusammenhang der Erfindung beispielsweise der Zustand der EUC verstanden werden, in dem die Sicherheit (z. B. eine vorgegebene Betriebssicherheit des technischen Systems) erreicht ist.

Unter einem "Testmodul" kann im Zusammenhang mit der Erfindung beispielsweise ein Testgerät oder eine Prüfeinrichtung (en: test harness) oder eine Einrichtung verstanden werden, die z. B. in der Lage ist (bis zu einem sinnvollen Grad), die Betriebsumgebung der Software oder Hardware während der Entwicklung durch Anwendung von Testfällen auf die Software und Aufzeichnung der Antwort zu simulieren. Das Testmodul kann z. B. auch Testfallgeneratoren und Einrichtungen enthalten, um die Testergebnisse nachzuprüfen (entweder automatisch gegen Werte, die als korrekt angenommen werden, oder durch manuelle Analyse).

Unter eine "Steuersignal" kann im Zusammenhang mit der Erfindung beispielsweise ein Signal verstanden werden, das für die Durchführung von Prüfungen zwischen den beteiligten Software und/oder Hardware-Bestandteilen übertragen wird

Unter einem "Trigger" kann im Zusammenhang mit der Erfindung beispielsweise ein Auslöser verstanden werden, der z. B. gemäß Vorgaben und/oder Referenzdaten die sicherheitsbezogene Funktion und/oder die Prüfeinrichtung angregt und/oder ansteuert. Trigger kann z. B. eine Person sein, die die sicherheitsbezogene Funktion auslöst oder eine Software, die z.B. durch Simulation im Sensor (z. B. die sog. HART-Funktion intelligenter Feldgeräte) bewirkt.

Unter "Referenzdaten" können in Zusammenhang mit der Erfindung beispielsweise Vorgaben und/oder Anforderungen verstanden werden, die z. B. durch eine Entität (z. B. die notifizierte Stelle) für einen Schutzkreis vorgegeben werden, wie z. B. die Dauer zwischen Auslösung und Erreichen des sicheren Zustands.

Im Folgenden wird eine bevorzugte Ausführungsform des erfindungsgemäßen Verfahrens anhand der beigefügten schematischen Zeichnungen erläutert. Es zeigt:
Fig. 1 eine schematische Darstellung eines peer-to-peer Netzwerkes,
Fig. 2 eine schematische Darstellung einer in dem in Fig. 1 gezeigten peer-to-peer Netzwerk verwendeten Blockchain,
Fig. 3 eine schematische Darstellung einer Speichererweiterung zur Performancesteigerung,
Fig. 4 eine schematische Darstellung eines Verfahrensablaufs,
Fig. 5 eine schematische Darstellung eines weiteren Verfahrensablaufs betreffend eine Anwendung bei Systemen in Prozess- oder Fertigungsanlagen im Rahmen der Planung der Anlage,
Fig. 6 eine schematische Darstellung eines Verfahrensablaufs für eine Funktionsprüfung,
Fig. 7 eine schematische Darstellung eines weiteren Verfahrensablaufs für eine Funktionsprüfung,
Fig. 8 eine schematische Darstellung eines weiteren Verfahrensablaufs für eine Funktionsprüfung,
Fig. 9 und Fig. 10 zeigen ein weiteres Ausführungsbeispiel der Erfindung.

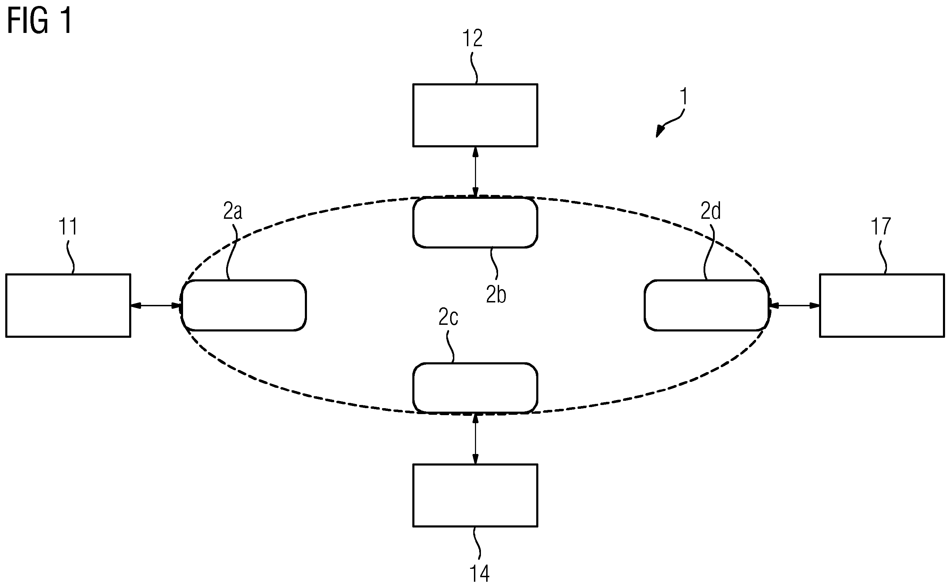

Es wird zunächst auf Fig. 1 Bezug genommen.

Dargestellt ist ein verteiltes peer-to-peer Netz 1, dass zur Umsetzung eines computerimplementiertes Verfahrens zum Bereitstellen von Daten, im vorliegenden Ausführungsbeispiel für eine Konformitätsverfolgung eines Systems oder einer Anlage ausgebildet ist.

Das peer-to-peer Netz 1 umfasst im vorliegenden Ausführungsbeispiel vier Nodes 2a, 2b, 2c, 2d.

Dabei wird unter einem peer-to-peer Netz 1 ein Computernetzwerk verstanden bei dem alle Nodes 2a, 2b, 2c, 2d gleichberechtigt sind im Gegensatz zu einem Computernetzwerk mit einer Client-Server-Architektur.

An jedem der Nodes 2a, 2b, 2c, 2d kann ein Computer oder ein Cloud-Computer angebunden sein. Die so entstehende Rechenleistung des Gesamtsystems bildet die Hardware-Basis.

Für eine Konformitätsverfolgung eines Systems oder einer Anlage benötigt nur eine begrenzte und speziell autorisierte Gruppe von Anwendern Zugriff auf die Daten. Daher wird im vorliegenden Ausführungsbeispiel - wie noch später detailliert erläutert wird - eine private Blockchain gebildet.

In dem in Fig. 1 dargestellten Szenario ist der erste Node 2a einem Lieferanten, der zweite Node 2b einem Fabrik- oder Anlagenbauer, der dritte Node 2c einem Prüfer bzw. notifizierenden Stelle und der vierte Node 2d einem Betreiber zugeordnet.

Jeder Node 2a, 2b, 2c, 2d enthält neben Hardware-Komponenten auch Software-Komponenten in Form von Computerprogrammprodukten, bei denen es sich um Blockchain-Software (stack) handelt, deren Aufgaben und Funktionen später detailliert erläutert werden.

Des Weiteren kann z.B. für eine Konformitätsverfolgung ein user interface mit vorgesehen sein oder eine bestehende Planungs-, Engineering oder Abwicklungssoftware eingebunden sein. In letzterem Fall wird das user interface bestehender Software (z.B. COMOS - eine einheitliche Datenbankplattform für Anlagenbauer) so adaptiert, dass die erforderlichen Informationen der Konformität mit entsprechenden Meta-Daten in einen distributed ledger publiziert oder diese bei Bedarf rückgelesen werden können um weitere Arbeitsschritte zu ermöglichen.

Dabei wird unter distributed ledger eine spezielle Form der elektronischen Datenverarbeitung und -speicherung verstanden. Als distributed ledger oder "Verteiltes Kontenbuch" wird eine dezentrale Datenbank bezeichnet, die Teilnehmern des Netzwerks eine gemeinsame Schreib- und Leseberechtigung erlaubt. Im Gegensatz zu einer zentral verwalteten Datenbank bedarf es in diesem Netzwerk keiner zentralen Instanz, die neue Einträge in der Datenbank vornimmt. Neue Datensätze können jederzeit von den Teilnehmern selbst hinzugefügt werden. Ein anschließender Aktualisierungsprozess sorgt dafür, dass alle Teilnehmer jeweils über den neuesten Stand der Datenbank verfügen. Eine besondere Ausprägung der distributed ledger ist eine Blockchain 3.

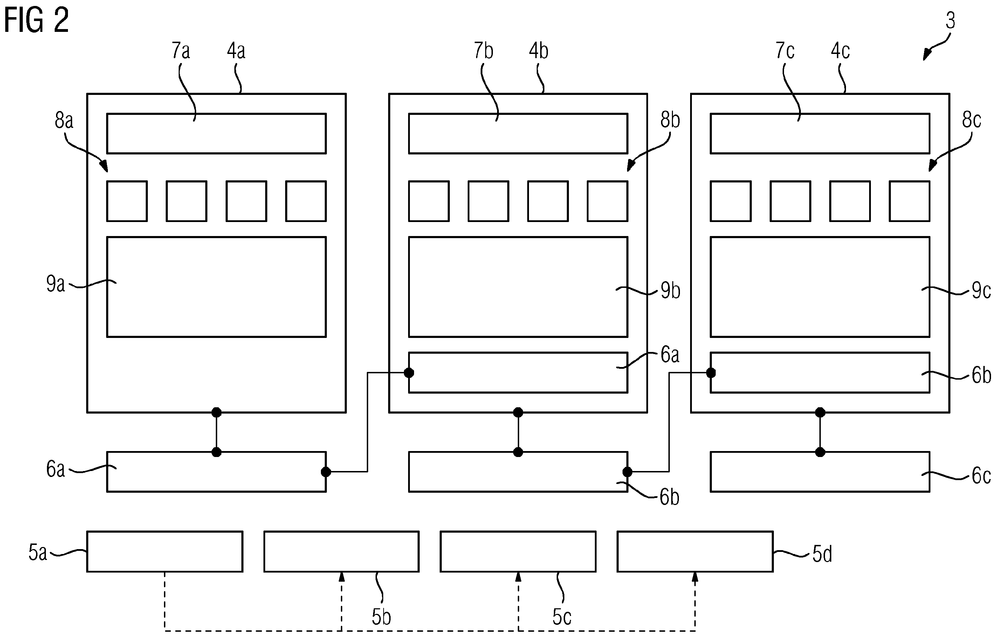

Es wird nun zusätzlich auf Fig. 2 Bezug genommen.

Dargestellt ist die Blockchain 3. Dabei wird unter einer Blockchain 3 eine kontinuierlich erweiterbare Liste von Datensätzen verstanden, welche mittels kryptographischer Verfahren miteinander verkettet sind. Jeder Block enthält dabei typischerweise eine kryptographisch sichere Prüfsumme des vorhergehenden Blocks, sowie gegebenenfalls einen Zeitstempel und weitere Transaktionsdaten.

Im vorliegenden Ausführungsbeispiel weist die Blockchain 3 einen ersten Datenblock 4a mit einem ersten Datensatz und einen zweiten Datenblock 4b mit einem zweiten Datensatz sowie einen dritten Datenblock 4c mit einem dritten Datensatz auf. Dabei wird im Verlauf einer Konformitätsverfolgung in einem ersten Schritt zuerst der erste Datenblock 4a erzeugt, mit dem die Blockchain 3 begonnen wird. In weiteren Schritten werden der zweite Datenblock 4b mit dem zweiten Datensatz sowie der dritte Datenblock 4c mit dem dritten Datensatz hinzugefügt und so die Blockchain 3 erweitert.

Jedem der Datenblöcke 4a, 4b, 4c ist eine jeweilige Prüfsumme 6a, 6b, 6c zugeordnet, wie z.B. ein Hash-Wert. Zum Bestimmen der Prüfsumme 6a, 6b, 6c kann z.B. eine Hashfunktion, wie der SHA-256 Algorithmus (Secure Hash Algorithm) verwendet werden.

Die Datensätze der jeweiligen Datenblöcke 4a, 4b, 4c weisen jeweils eine Blocknummer 7a, 7b, 7c repräsentativ für die jeweilige Position in der Blockchain 3, eine oder mehrere digitale Signaturen 8a, 8b, 8c repräsentativ für den jeweiligen Nutzer, Daten 9a, 9b, 9c betreffend die Konformitätsverfolgung, wie z.B. Prüfzertifikate etc., und die jeweilige Prüfsumme 6a, 6b, 6c des vorherigen Datenblocks 4a, 4b auf.

So weist der erste Datenblock 4a, da er der erste Datenblock 4a ist, keine Prüfsumme eines Vorgängerblocks auf, während der zweite Datenblock 4b die erste Prüfsumme 6a des ersten Datenblocks 4a aufweist und der dritte Datenblock 4b die zweite Prüfsumme 6b des zweiten Datenblocks 4b aufweist.

Der erste Datenblock 4a ist einer ersten Instanz 5a, im vorliegenden Ausführungsbeispiel dem Lieferanten 11 zugeordnet, während der zweite Datenblock 4b einer zweiten Instanz 5b, z.B. dem Fabrik/Anlagenbauer 12 und der dritte Datenblock 4c einer dritten Instanz 5c, z.B. der notifizierenden Stelle 14 zugeordnet ist. Abweichend hiervon sind auch andere Zuordnungen möglich.

Die erste Instanz 5a, also diejenige Instanz, die die Blockchain 3 mit dem ersten Datenblock 4a startet, ist im vorliegenden Ausführungsbeispiel dazu vorgesehen, proof-of-authority Nachweise 10 zu emittieren. Mit anderen Worten, die erste Instanz 5a kann als Ursprungs- oder Basisinstanz angesehen werden.

Die proof-of-authority Nachweise 10 werden an die anderen Instanzen 5b, 5c übermittelt. Die proof-of-authority Nachweise 10 versetzten die anderen Instanzen 5b, 5c in die Lage, weitere Datenblöcke 4b, 4c zu der Blockchain 3 hinzuzufügen.

Die proof-of-authority Nachweise 10 können eine zeitlich begrenzte Gültigkeit und/oder eine inhaltliche Gültigkeit und/oder eine nutzerbezogene Gültigkeit haben.

Dabei wird unter einer zeitlich begrenzten Gültigkeit verstanden, dass die proof-of-authority Nachweise 10 ein Verfallsdatum aufweisen und nach Überschreiten des Verfallsdatums eine der weiteren Instanzen 5b, 5c nicht mehr in die Lage versetzen, weitere Datenblöcke 4b, 4c zu der Blockchain 3 hinzuzufügen. So kann z.B. der Umstand abgebildet werden, dass ein Nachweis einer Prüfung innerhalb einer vorbestimmten Zeitspanne erbracht werden muss. Ferner wird so einem Missbrauch entgegengewirkt, da ein proof-of-authority Nachweis 10 keine unbegrenzte Lebensdauer hat.

Unter einer inhaltlichen Gültigkeit wird verstanden, dass die proof-of-authority Nachweise 10 nur dazu berechtigen, dass vorbestimmte Eingaben gemacht werden können, wie z.B. die Bestätigung, dass eine Prüfung durchgeführt wurde. Mit anderen Worten, die proof-of-authority Nachweise 10 sind sachgebunden. Auch so kann einem Missbrauch entgegengewirkt werden.

Unter einer nutzerbezogenen Gültigkeit wird verstanden, dass die proof-of-authority Nachweise 10 nur eine jeweilige, vorbestimmte Instanz 5a, 5b, 5c dazu berechtigen, dass vorbestimmte Eingaben gemacht werden können, wie z.B. die Bestätigung, dass eine Prüfung durchgeführt wurde. Mit anderen Worten, die proof-of-authority Nachweise 10 sind individualisiert bzw. nutzerbezogen.

Es kann auch vorgesehen sein, dass einer der Datenblöcke 4a, 4b, 4c als ein Smart Contract ausgebildet ist. Dabei werden unter Smart Contracts Verträge auf Software-Basis verstanden, bei denen unterschiedlichste Vertragsbedingungen hinterlegt werden können. Während des Vertragsverlaufs können bestimmte verknüpfte Aktionen (z.B. Auszahlungen) selbsttätig ausgeführt werden, wenn ein entsprechender Auslöser (z.B. Erfüllung von Vertragsbedingungen) vorliegt.

So kann einer der Datenblöcke 4a, 4b, 4c dazu ausgebildet sein auf Vorliegen einer vorbestimmten Bedingung einen proof-of-authority Nachweis 10 bereitzustellen. Somit erzeugt nicht nur die erste Instanz 5a die proof-of-authority Nachweise 10, sondern die jeweiligen proof-of-authority Nachweise 10 werden erst erzeugt und bereitgestellt, wenn die vorbestimmten Bedingungen eines Vorgängerschritts, wie z.B. ein Nachweis von Zwischentests oder Vorprüfungen, nachgewiesen wurden. Somit entfällt, proof-of-authority Nachweise 10 zu Beginn "auf Vorrat" zu erzeugen und sicher vor unbefugten Zugriff zu archivieren, was die Sicherheit erhöht.

Des Weiteren kann einer der Datenblöcke 4a, 4b, 4c dazu ausgebildet sein, auf Vorliegen eines vorbestimmten Fehlerfalls eine Fehlerbehandlungsmaßnahme bereitzustellen. So kann z.B. die Blockchain 3 dazu genutzt werden, Fehlerbehandlungsmaßnahmen bereitzustellen. Wenn bei einer Komponente einer Anlage, wie z.B. einem Feldgerät, ein Fehler auftritt, triggert das dazu korrespondierende Fehlersignal den als Smart Contract ausgebildeten Datenblock 4a, 4b, 4c, so dass dann eine entsprechende Maßnahme zur Fehlerbehandlung, wie Deaktivierung des defekten Feldgeräts und Benachrichtigung zum Austausch, umgesetzt werden. Außerdem ist eine Heilungsfunktion vorgesehen zum Ändern von einem oder mehreren der Datenblöcke 4a, 4b, 4c.

Da eine begrenzte Menge an bekannten Beteiligten agiert, kann zur "Heilung" von Fehlern bei der Umsetzung der Technologie ein eigener Smart Contract mit einer Heilungsfunktion realisiert werden, der bei expliziter Zustimmung aller Beteiligten Fehler oder falsche Daten benennt oder kenntlich macht. Dies kann vorteilhaft in einer ersten Phase der Umsetzung Verwendung finden. Für den Fall einer Datenreduktion oder technisch bedingten Migration kann die Übertragung der Datenhaltung in eine neu initiierte Blockchain 3 vorgesehen sein.

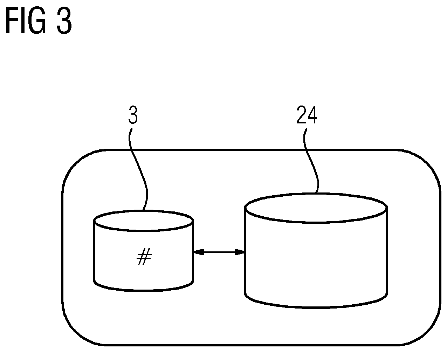

Es wird nun zusätzlich auf Fig. 3 Bezug genommen.

Dargestellt ist eine Massendatenverarbeitung zur Performancesteigerung. Hierzu kann ein Replikationssystem 24, wie z.B. IPFS, verwendet werden, wobei in der Blockchain 3 z.B. ein Zeiger verschlüsselt archiviert ist, der auf korrespondierende Speicherbereiche des Replikationssystems 24 verweist. Dies kann als Betriebssystem oder verteilte und hochverfügbare Ablaufumgebung angesehen werden.

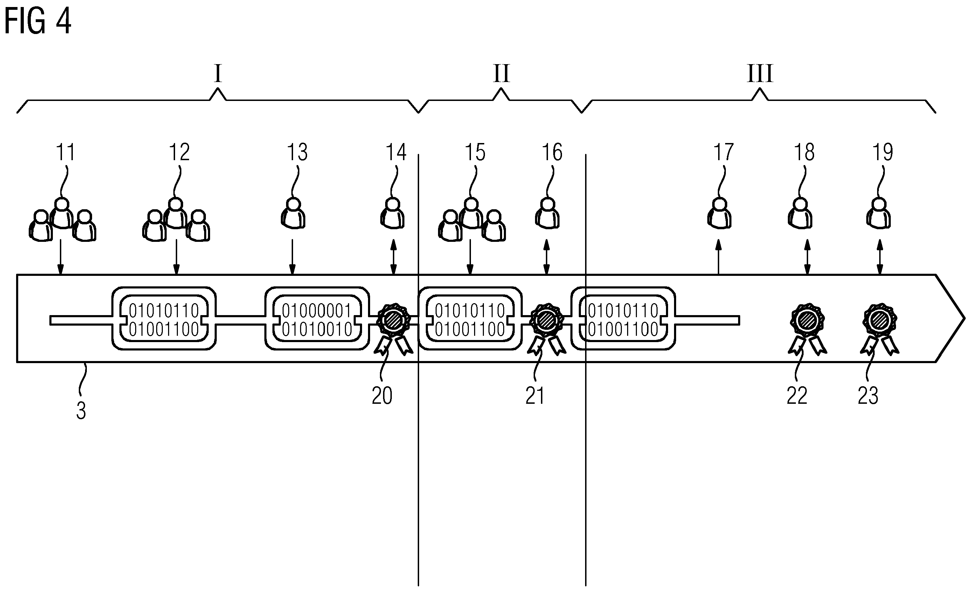

Es wird nun unter zusätzliche Bezugnahme auf Fig. 4 ein Ausführungsbeispiel eines Verfahrensablaufs erläutert.

Der Verfahrensablauf gliedert sich in drei Phasen, einer ersten Phase I konforme Auslegung und Planung, einer zweiten Phase II konformer Bau, und einer dritten Phase III konformer Betrieb, Wartung und Pflege.

In der ersten Phase I sind im vorliegenden Ausführungsbeispiel der Lieferant 11, der Anlagenbauer 12, ein Qualitätsmanager 13 und die notifizierende Stelle 14 beteiligt.

In der zweiten Phase II sind im vorliegenden Ausführungsbeispiel ein Anlagenbauer Montage 15 und eine weitere notifizierende Stelle 16 beteiligt.

In der dritten Phase III sind im vorliegenden Ausführungsbeispiel der Betreiber 17, eine weitere notifizierende Stelle 18 und eine Überwachungsbehörde 19 beteiligt.

Nachdem ein verteiltes peer-to-peer Netz 1 eingerichtet wurde, erstellt in der ersten Phase I im vorliegenden Ausführungsbeispiel der Lieferant 11 als erste Instanz 4a z.B. den ersten Datenblock 4a für die Blockchain 3 mit einer ersten Prüfsumme 6a. Ferner erstellt der Lieferant 11 als erste Instanz 4a die proof-of-authority Nachweise 10.

Abweichend vom vorliegenden Ausführungsbeispiel kann die Blockchain auch vom Betreiber 17 oder von der Überwachungsbehörde 19, wie z.B. dem TÜV, für den Betreiber 17 initiiert werden, da der Betreiber 17 als zeitlich erster für die Anlage die Konformität sicherstellen muss. Daher sind am Anfang der Betreiber 17, dann die Überwachungsbehörde 19, wie der TÜV oder andere Behörden, dann Anlagenbauer 12, dann dessen Lieferanten 11 und dann diverse weitere Beteiligte zu autorisieren, in die Blockchain 3 Daten einzuspeisen. Wer wann autorisiert wird Daten zu publizieren und/oder zu lesen kann der Betreiber 17 oder die Überwachungsbhörde 19 administrieren. Die Reihenfolge der Datenbereitstellung hängt von den jeweiligen behörlichen Auflagen, den notwendigen technischen Systemen und vielen anderen anlagenspezifischen Randbedinungen ab.

In einem weiteren Schritt erzeugt der Anlagenbauer 12 als zweite Instanz 4b z.B. den weiteren Datenblock 4b mit einer weiteren Prüfsumme 6b, und in einem weiteren Schritt erzeugt der Qualitätsmanager 13 den weiteren Datenblock 4c mit einer weiteren Prüfsumme 6c.

Dabei wird in die jeweiligen nachfolgenden Datenblöcke die Prüfsumme 6a, 6b des vorherigen Datenblocks 6a, 6b eingefügt. Es wird also in den weiteren Datenblock 4b die Prüfsumme 6a des ersten Datenblocks 4a eingefügt und in den weiteren Datenblock 4c wird die weitere Prüfsumme 6b eingefügt.

Die weiteren Datenblöcke 4b, 4c werden erst zu der Blockchain 3 hinzugefügt, nachdem sich der Anlagenbauer 12 als zweite Instanz 4b und der Qualitätsmanager 13 mit einem jeweiligen proof-of-authority 10 autorisiert haben.

Danach steht die Blockchain 3 allen genannten Beteiligten zur Verfügung, und es werden ferner Kopien der Blockchain 3 auf alle Nodes 2a, 2b, 2c, 2d verteilt.

In einem weiteren Schritt erstellt die notifizierende Stelle 14 nach Überprüfung der in der Blockchain 3 archivierten Dokumentation ein Zertifikat 20 und fügt es z.B. als Dokument, wie z.B. als pdf-Dokument, der Blockchain 3 hinzu, nachdem sie sich mit einem jeweiligen proof-of-authority 10 autorisiert hat. Somit steht nun auch das Zertifikat 20 allen genannten Beteiligten zur Einsicht zur Verfügung. Ferner werden Kopien der Blockchain 3 auf alle Nodes 2a, 2b, 2c, 2d verteilt.

In der zweiten Phase II wird der Kreis der Beteiligten vergrößert, und zwar um den Anlagenbauer Montage 15 und die weitere notifizierende Stelle 16, die hierzu mit jeweiligen proof-of-authority Nachweisen 10 versehen werden.

Der Anlagenbauer Montage 15 erzeugt einen weiteren Datenblock mit einer weiteren Prüfsumme und fügt ihn der Blockchain 3 hinzu, nachdem er sich mit seinen proof-of-authority Nachweis 10 autorisiert hat. Im Anschluss fügt die notifizierte Stelle 16 nach Überprüfung der in der Blockchain 3 archivierten Dokumentation ein Zertifikat 21 der Blockchain 3 hinzu, nachdem die notifizierte Stelle 16 sich mit ihrem proof-of-authority Nachweis 10 autorisiert hat. Alternativ kann dies beispielsweise anstelle der notifizierten Stelle auch durch den Anlagenbauer durchgeführt werden.

In der dritten Phase III wird der Kreis der Beteiligten nochmals vergrößert, und zwar um den Betreiber 17, die weitere notifizierende Stelle 18 und die Überwachungsbehörde 19, die hierzu mit jeweiligen proof-of-authority Nachweisen 10 versehen werden.

Gegebenenfalls erzeugt der Betreiber 17 einen weiteren Datenblock (nicht dargestellt), z.B. zur Dokumentation der ordnungsgemäßen Wartung und Prüfung.

Im Anschluss fügen die weitere notifizierende Stelle 18 und die Überwachungsbehörde 19 nach jeweiliger Überprüfung der in der Blockchain 3 archivierten Dokumentation weitere Zertifikate 22, 23 zu der Blockchain 3 hinzu, nachdem sie sich mit ihrem proof-of-authority Nachweisen 10 autorisiert haben.

Somit stellt die Blockchain 3 eine nahezu unfälschbare verteilte, da replizierte und damit hochverfügbare Datenhaltung und Ablaufumgebung bereit, in der nun die Konfomitätsverfolgung automatisch erfolgen kann.

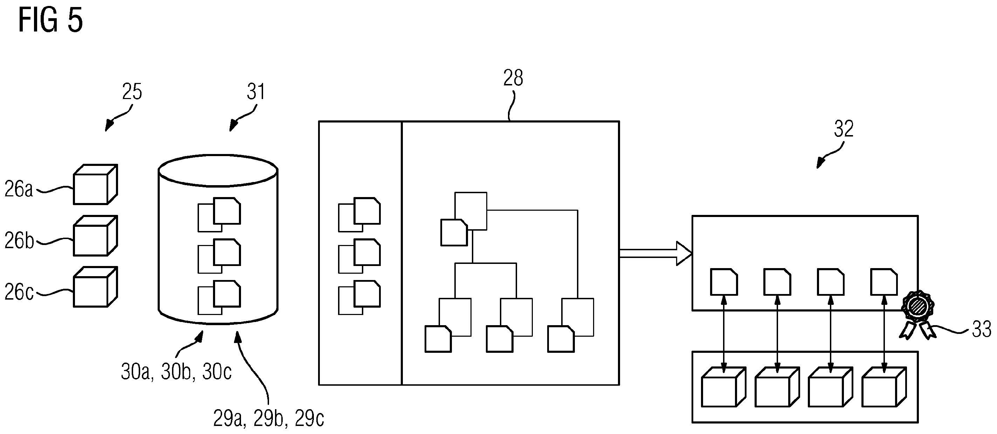

Es wird nun zusätzlich auf die Fig. 5 Bezug genommen, um ein weiteres Ausführungsbeispiel betreffend einer Anwendung bei Systemen in Prozess- oder Fertigungsanlagen im Rahmen der Planung der Anlage zu erläutern.

Bei Prozessanlagen ist die Blockchain 3 und die mit ihrer Hilfe speicherbaren Daten Bestandteil der Prozessanlage, vergleichbar zu der mit der Anlage zu pflegenden traditionellen Prüfdokumentation. Die Blockchain 3 wird z.B. durch den verantwortlichen Eigentümer/ Besitzer bzw. Betreiber 17 aufrechterhalten bzw. weiter gepflegt als in der Funktion als nun erste Instanz 5a. Mit anderen Worten, Beteiligte können ihre Rollen wechseln, d.h. die Rolle oder Funktion der ersten Instanz 5a geht von den Lieferanten 11 zu dem Betreiber 17 über.

Hierfür veranlasst der Betreiber 17 die Entstehung oder Pflege der Blockchain 3 und administriert die erforderlichen Smart Contracts 29a, 29b, 29c. Erforderliche Beteiligte, z.B. der Anlagenbauer 12, seine Lieferanten 11, die notifizierte Stelle 14, die Überwachungsbehörde 19 usw. werden autorisiert Informationen entsprechend ihrer Rolle beizutragen. Die Authentifizierung wird von der Blockchain 3 bereitgestellt und kann ggfs. noch ausgedehnt werden, z.B. durch 2-Faktor-Authentifizierung oder gemeinsame Mehrparteien-Schlüssel.

Die Auswahl und das in Funktion setzen der notwendigen/gewünschten Smart Contracts 29a, 29b, 29c kann der Verantwortliche, z.B. der Betreiber 17, initiieren und kontrollieren. Ggfs. kann er sich eines kompetenten Partners bedienen, wie z.B. der notifizierten Stelle 14, die diese Smart Contracts validiert und freigibt.

Zu Beginn des Prozesses spezifizieren z.B. der Betreiber 17 und ein Planer, wie z.B. der Anlagenbauer 12, relevante Anforderungen für die Blockchain 3 der Fabrik/Anlage, z.B. gemeinsam mit der Überwachungsbehörde 19 und der notifizierenden Stelle 14 bezüglich funktionaler Sicherheit, druckbeaufschlagte Bauteile, Explosionsschutz, Emissionen, CE-Kennzeichnung und weitere Anforderungen. Eine nachträgliche Erweiterung durch Hinzufügen weiterer Smart Contracts ist berücksichtigt.

Diese Vorgänge werden selbstständig und autonom ausgeführt.

Ein Hersteller 25 von Produkten, z.B. von fehlersicheren Steuerungen, stellt für seine Produkttypen 26a, 26b, 26c standardisierte Smart Contracts 29a, 29b, 29c zusammen mit jeweiligen Produktdokumentationen 30a, 30b, 30c öffentlich bereit, z.B. in einen Onlinekatalog 31, die die Dokumentation der Eignung, wie z.B. ein Zertifikat eines Prüfers, beinhalten.

Auch die Zertifizierung des Produkttyps 26a, 26b, 26c kann bereits hier durch eine notifizierte Stelle 14 über die Blockchain 3 realisiert werden.

Die Smart Contracts 29a, 29b, 29c ermöglichen die automatisierte Verifizierung von Planung, Ausführung und unterstützen wiederholbare Prüfungen im Rahmen der Konformitätsverfolgung.

Hersteller von Planungswerkzeugen laden diese Smart Contracts 29a, 29b, 29c über ein geeignetes Interface als Bibliotheksbestandteile in ihre Planungssysteme 28, wie z.B. COMOS oder Teamcenter.

Zunächst werden so sicherheitsrelevante Eigenschaften, z.B. das bisherige Zertifikat 20, verfügbar gemacht und die korrekte Integration der Produkte in dds Planungssystem 28 bzw. -werkzeugen sichergestellt.

Die produktspezifischen zertifizierten Smart Contracts 29a, 29b, 29c sind zwar verschlüsselt, allerdings ist der Quellcode einsehbar und durch eine Prüfsumme (nicht dargestellt), wie z.B. einen Hash, auch im Planungssystem 28 (oder später während der Konformitätsverfolgung in der Blockchain 3) verifizierbar. Dies gewährleistet Transparenz und Auditierbarkeit.

Im Rahmen der Planung einer Anlage erfolgt nun die Integration der Produkte konform ihren vorgegebenen Eigenschaften durch den Anlagenbauer 12. Das Planungssystem 28 stellt die konforme Verwendung sicher.

Bei der Instanziierung der Produkte für eine spezielle Anlage erfolgt im Planungssystem 28 die Zuordnung einer eindeutigen anlagenbezogenen Referenzkennzeichnung.

Für die Freigabe einer im Planungssystem 28 konfigurierten Lösung wird nun aus dem Planungssystem 28 die Konfiguration 32 der Produkte in der Konformitätsverfolgung publiziert. Die vom Planungssystem 28 vorgeprüfte Konfiguration 32 kann ggfs. zusätzlich durch die notifizierte Stelle 14 geprüft und freigegeben sowie mit einem Zertifikat 33 versehen werden.

Die zugehörigen Smart Contracts 29a, 29b, 29c haben nun den Meilenstein "Freigegebene Planung" erreicht und sind damit bereit für die Bestätigung der konformen Realisierung.

Die realen Produkte/Geräte sind so geartet, dass sie nun durch einen auslesbaren Schlüssel oder durch eine geeignete Kennung an der Komponente den erforderlichen Realisierungscode verfügbar machen können. Dies kann z.B. eine Kombination aus Eignung für die erforderliche Sicherheitsanforderungsstufe (SIL Level), der Instanznummer/Seriennummer, den Hersteller und den Produkttyp sein, die in der Fertigung dem Produkt mitübertragen wurden. Diese Codes werden aus der realisierten Anlage ausgelesen und an die Blockchain 3 zur Dokumentation übertragen. Die Smart Contracts 29a, 29b, 29c prüfen dies und bestätigen die Konformität autonom. Ggfs. erfolgt eine letzte Prüfung über die notifizierte Stelle 14.

So wird ein selbstzertifizierendes und automatisiertes Konfigurationsmanagement bereitgestellt, das den korrekten Einsatz der Produkte sicherstellt.

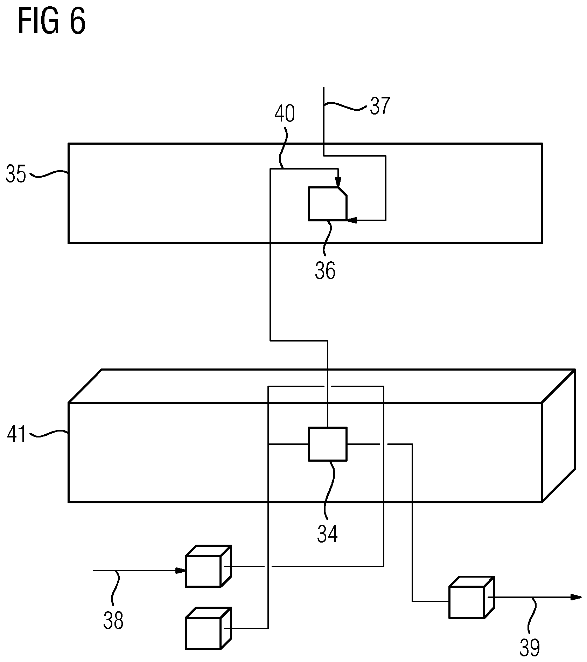

Es wird nun unter zusätzlicher Bezugnahme auf die Fig. 6 bis 8 ein Verfahren zur Funktionsprüfung erläutert.

Es wird nun zunächst auf Fig. 6 Bezug genommen.

Dargestellt ist eine Schutzlogik 34 einer fehlersicheren Steuerung 41 und ein in eine Ablaufumgebung 35 eingebettete Blockchain 3 sowie ein Smart Contract 36.

Im Betrieb triggert ein Testauslösesignal 37 den Smart Contract 36, worauf ein Testsignal 38 erzeugt wird, dass auf die Schutzlogik 34 aufgeschaltet wird. Als Ergebnis steht ein Auslösesignal 39 zur Verfügung.

Ferner wird ein Rückmeldesignal 40 zur Aktualisierung der Blockchain 3 erzeugt.

Auf das Rückmeldesignal 40 hin wird in der Blockchain 3 das Testergebnis archiviert.

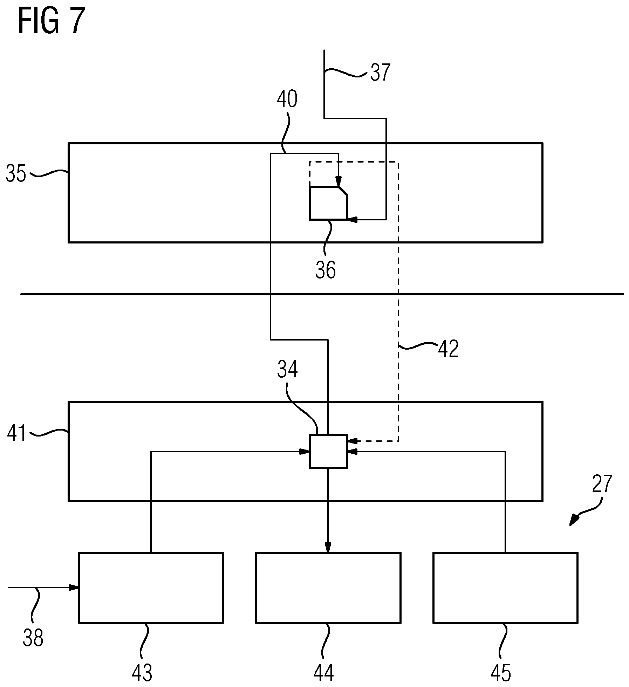

Es wird nun zusätzlich auf Fig. 7 Bezug genommen.

Das in Fig. 7 dargestellte Szenario unterscheidet sich von dem in Fig. 6 dargestellten Szenario dadurch, dass das Testauslösesignal 37 manuell in einem durch den Smart Contract 36 vorbestimmten Zeitfenster vorzuliegen hat und auf einen Sensor 43, wie z.B. einen Not-Aus-Taster, eines Sicherheitskreises 27 wirkt. Es wird also der Sicherheitskreis 27 überwacht, der im vorliegenden Ausführungsbeispiel zusätzlich einen Aktuator 44, wie z.B. ein Stellantrieb eines Dampfventils, und einen Sensor 45, wie z.B. ein Sensor zur Erfassung einer Endlage, aufweist.

Zusätzlich wird ein Rücksetzsignal 42 von dem Smart Contract 36 zum Zurücksetzen der Schutzlogik 34 erzeugt. Mit dem Rücksetzsignal 42 wird die Schutzlogik 34 wieder in den Zustand gebracht, den sie vor dem Funktionstest hatte.

Ferner wird ein Rückmeldesignal 40 zur Aktualisierung der Blockchain 3 erzeugt.

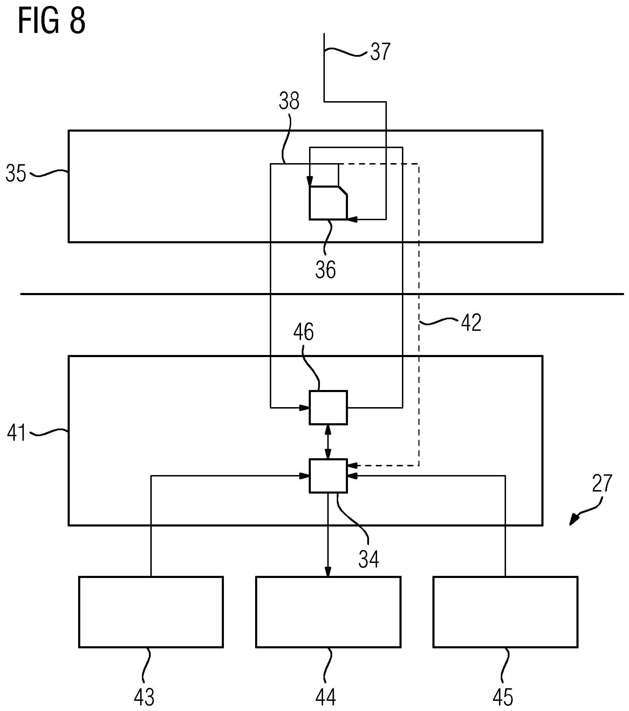

Es wird nun zusätzlich auf Fig. 8 Bezug genommen.

Höherwertig ausgeführte Anlagen bieten teilweise eine vorgefertigte Testeinrichtung, wie z.B. eine Prüflogik 46, um diese Prüfung auch während der Betriebsdauer der Anlage (meist im Stillstand) wiederholen zu können.

Das in Fig. 8 dargestellte Szenario unterscheidet sich von dem in Fig. 7 dadurch, dass, der Smart Contract 36 selbst das Testsignal 38 bereitstellt und auf die Prüflogik 46 für die Schutzlogik 34 aufschaltet.

So kann im Rahmen einer Funktionsprüfung das korrekte Zusammenspiel der einzelnen Komponenten, wie z.B. Sensoren 43, 45, Übertragung, Erfassung, Schutzlogik 34, Auslösesignal 39, Übertragung und Aktuatoren 44, sichergestellt werden. Dies erfolgt erstmalig vor einer Abnahme.

Durch ein in der Blockchain 3 dokumentierbares Auslösesignal 39 diese Funktionsprüfung und der Protokollierung der Signale und der beteiligten Geräte kann eine erfolgreiche und konforme Funktionsprüfung auch automatisiert ausgeführt und in der Blockchain 3 registriert bzw. bestätigt werden. Hierfür bedarf es im Steuerungssystem (Leitsystem) einer geeigneten Logik, die für diesen Zweck geeignet (i.d.R. vom TÜV validiert und freigegeben) sein muss.

Zusätzlich bedarf es eines Bausteins der fehlersicheren Steuerung, der Ereignisse in die Blockchain 3 übermitteln kann. Dies ist das schutzauslösende Ereignis (Eingang), ggfs. Zustände in der Verarbeitung und das Setzen der Ausgänge.

Diese Zustände werden mit erforderlichen Metadaten (Automatisierungsgerät, Zeitstempel, usw.) direkt in die Blockchain 3 übertragen, so dass eine Bewertung und Dokumentation des Ergebnisses möglich ist. Die Übertragung kann z.B. verschlüsselt erfolgen.

In Verbindung mit einem aktiven fehlersicheren Programmcode, der über die Prüfsumme 6a, 6b, 6c eindeutig in der Blockchain 3 identifiziert werden kann, ist eine lückenlose Dokumentation des Vorgangs vollständig möglich.

Bei der Prüfsumme 6a, 6b, 6c handelt es sich vorzugsweise um eine eigene Prüfsumme und/oder separate Prüfsumme die beispielsweise jeweils für einen entsprechenden Programmcode gebildet wurde.

Alternativ oder zusätzlich kann in Verbindung mit der Dokumentation des zum Prüfzeitpunkt aktiven fehlersicheren Programmcodes, der z. B. im Schutzsytem über eine eigene Prüfsumme gegen Veränderung gesichert ist, kann durch Aufnahme dieser Prüfsumme in die Blockchain eine lückenlose Dokumentation des Vorgangs vollständig erreicht werden.

Um die vollständige Schutzlogik 34 (auch physikalisch) zu erfassen, z.B. das Schließen eines Ventils, müssen unter Umständen weitere Messungen in die Funktionsprüfung einbezogen werden. Dies kann das Erliegen eines Durchflusses, das Sinken eines Druckes oder die Rückmeldung der Endlage einer Armatur sein.

Da ein fehlersicherer Teil mit sogenannten Kanaltreibern den Übergang zur entsprechenden Ein und Ausgabekarte bildet, kann die physikalische Ausführung des gesamten fehlersicheren Systems einschließlich der Ein- und Ausgabekarten, Verkabelung, Bussystem, Feldgeräte nicht ohne eine neue Funktion im Steuerungssystem automatisch ausgelesen und dokumentiert werden. Unter Einbezug von intelligenten Feldgeräten (HART, Profibus) ist zumindest die Einbeziehung dieser Bereiche möglich. Hierzu kann das Steuerungssystem z.B. verschlüsselte Kennungen der Geräte auslesen können und diese in der Blockchain 3 zusammen mit den Prüfwerten der fehlersicheren Steuerung dokumentieren.

Soweit noch erforderlich, kann die notifizierte Stelle 14 nun die Auswertung der in der Blockchain 3 verfügbaren Daten stützen und die formale Freigabe erteilen.

Dem Betreiber 17 kommt im Wesentlichen noch die Verantwortung und das übergeordnete Management (Administration der Smart Contracts 29a, 29b, 29c, Autorisierung und Rollenverteilung) der Zusammenarbeit und das Veranlassen der notwendigen Maßnahmen zu.

Die Ausführung einer wiederkehrenden Funktionsprüfung kann im Leitsystem eines Kraftwerks durch das verifizierte fehlersichere System ausgeführt werden. Dabei wird das Leitsystem so programmiert, dass eine wiederkehrende Prüfung nach einer einstellbaren Zeit selbständig oder manuell veranlasst durch eine Schalthandlung des autorisierten Bedieners ausgelöst wird.

Das erfolgreiche Testergebnis (hier z.B. Test der Auslösung des Stillstandsbetriebs durch einen Not-Aus-Taster) wird mit Hilfe eines Smart-Contracts 29a, 29b, 29c in der Blockchain 3 fälschungssicher dokumentiert.

Wenn die Funktionsprüfung fehlschlägt oder nicht im erforderlichen Prüfintervall ausgelöst wird, kann die Blockchain 3 nach Ablauf einer entsprechend definierten Zeit automatisch den Anlagenbetrieb unterbrechen (automatisches Abfahren) oder eine entsprechende behördliche Meldung auslösen (vgl. auch IEC 61508-1 Kapitel 6.2.5).

Eine andere automatisierbare Funktion ist der Vergleich von zur Ausführung freigegebener Planung mit der tatsächlichen Ausführung im Bereich von mechanischen Komponenten, z.B. druckbeaufschlagten Bauteilen.

Durch die Verwendung von entsprechenden Datenformaten, z.B. 3D-Daten der Ausführungsplanung, kann ein automatischer Vergleich von Soll- und Ist-Zustand (fotografierte oder 3D-gescannte reale Ausführung) eine automatisierte Inbetriebnahme-Freigabe auslösen. Hierfür kann auf Basis von Blockchain-Technologie eine verifizierte Kamera (verifiziert = vom TÜV für diesen Zweck geprüfte und freigegebenes Kameraprodukt oder Software) verwendet werden, die fälschungssichere Aufnahmen in der Blockchain 3 bereitstellt.

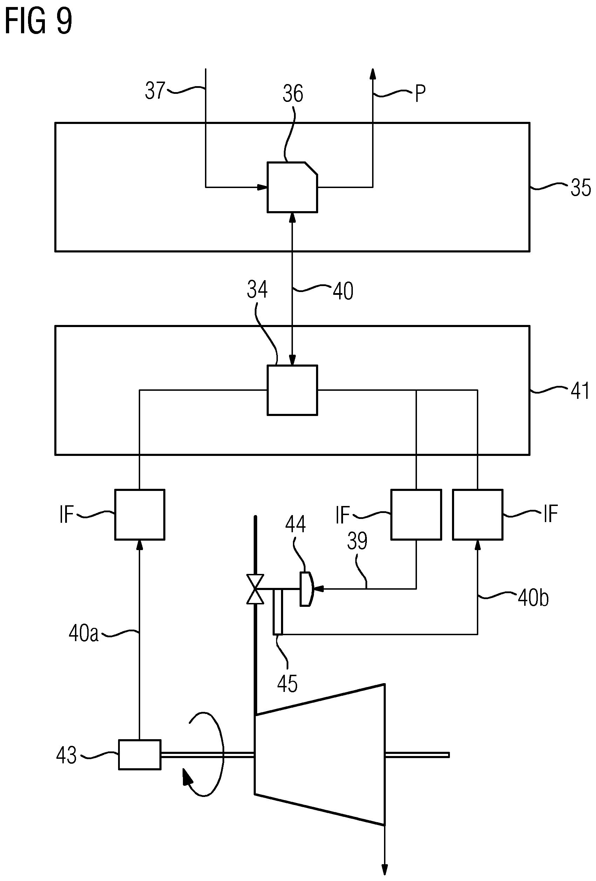

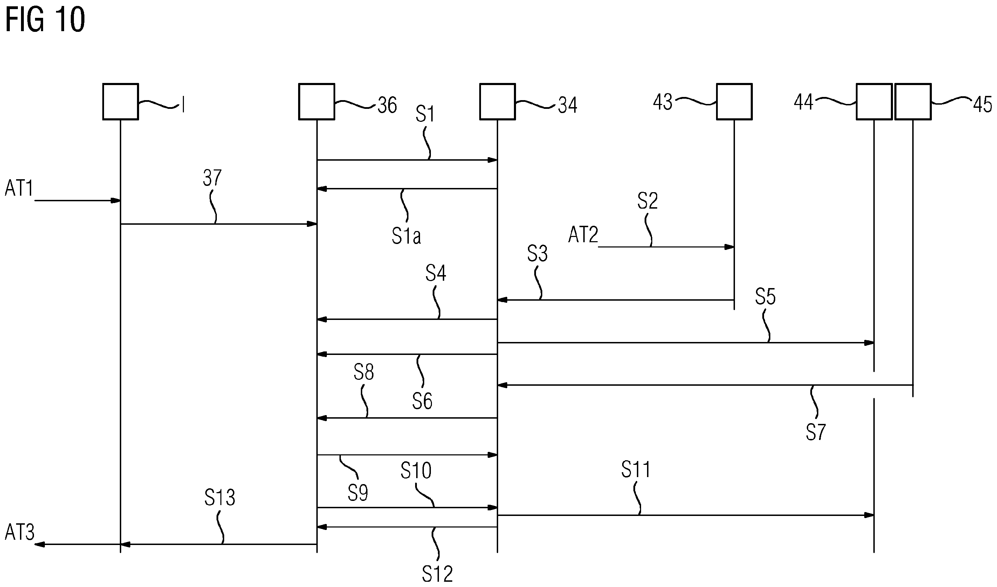

Ein weiteres Ausführungsbeispiel wird in den Fig. 9 und 10 dargestellt.

Im Einzelnen wird ein computerimplementiertes Verfahren und/oder ein System zur Prüfung eines technischen Systems dagestellt, wobei das Verfahren bzw. das System sich insbesondere für eine Konformitätsverfolgung der technischen Anlage eignen. Dabei werden beispielsweise ein Subsystem z. B. ein Aktuator (z. B. ein pneumatischer Stellantrieb 44 des Dampfschnellschlussventils des technischen Systems) oder mehrere Geräte getestet, um festzustellen, ob diese vorgegebenen Anforderungen genügen. Ein Gerät und/oder ein Subsystem kann beispielsweise ein Schutzkreis des technischen Systems sein und/oder ein Teil des zu testenden Schutzkreises des technischen Systems sein und/oder die Schutzlogik 34 sein.

Das System umfasst ein Testmodul (z. B. ein Testgerät) einer fehlersicheren Steuerung 41 und ein in eine Ablaufumgebung 35 in Form einer Netzwerk-Applikation (z. B. eine Blockkette) sowie eine Teststeuerungstransaktion 36, die z. B. zumindest zum Teil als Smart Contract realisiert ist. Das Testmodul kann beispielsweise über die Schutzlogik 34 realisiert sein oder als Komponente der Netzwerk-Applikation oder als Smart-Contract realisiert sein. Alternativ kann die Schutzlogik 34 das Testmodul umfassen oder dem Testmodul entsprechen. Alternativ umfasst das Testmodul die Schutzlogik 34.

Im Betrieb triggert ein Testauslösesignal 37 die Teststeuerungstransaktion 36. Dies kann beispielsweise von einer ersten Entität AT1 über eine Datenschnittstelle I erfolgen. Bei der Entität AT1 kann es sich z. B. um ein Blockketten-Orakel handeln, das einen entsprechenden Trigger bereitstellen oder an die Netzwerk-Applikation überträgt. Alternativ kann die Entität AT1 auch ein Mensch, ein Testnutzer oder eine Software zum automatisierten Testen des technischen Systems sein.

Der Trigger kann beispielsweise durch einen Sensorwert ausgelöst worden sein, der einen vorgegebenen Schwellwert überschritten hat oder augrund einer zeitlichen Steuerung ausgelöst worden sein. Es kann beispielsweise mehrere Arten von Trigger geben, die unterschiedliche Tests oder Prüfungen für ein Gerät der Anlage ausführen. Entsprechend kodiert der Trigger, welcher Test für welches Gerät ausgeführt werden soll. Beispielsweise ist die Art und/oder der Umfang eines zulässigen Tests durch eine entsprechende (berechtigte) Entität (z. B. die notifizierte Stelle) vorgebeben, die entsprechende (berechtigte) Entität kann dabei z. B. den erforderlichen Trigger und/oder entsprechenden Referenzdaten vorgeben.

Die Teststeuerungstransaktion 36 umfasst Steuerbefehle und/oder Referenzdaten um ein entsprechendes Gerät des technischen Systems (z. B. eine Anlage, eine Prozessanlage, ein Automatisierungssystem) zu überprüfen.

Es können beispielsweise mehrere Tests oder Prüfungen für ein Gerät in der Teststeuerungstransaktion 36 oder weiteren Teststeuerungstransaktionen kodiert/umfasst sein. Hierzu umfasst eine entsprechende Teststeuerungstransaktion entsprechende gerätespezifische und/oder testspezifische Steuerbefehle und/oder Referenzdaten, wobei die entsprechenden gerätespezifischen und/oder testspezifischen Steuerbefehle und/oder Referenzdaten mittels des Triggers ausgewählt werden. Mit anderen Worten können entsprechende Teststeuerungstransaktionen gerätespezifischen und/oder testspezifischen Tests und/oder Prüfungen für Geräte des technischen Systems kodieren, wobei eine Auswahl eines entsprechenden Tests und/oder Prüfungs mittels Daten erfolgt, die der Trigger umfasst oder kodiert.

Durch den Trigger wird die für einen Test oder eine Prüfung relevante Teststeuerungstransaktion 36 geladen. Diese Teststeuerungstransaktion 36 kann dabei beispielsweise in das Testmodul geladen werden oder die Netzwerk-Applikation oder die Teststeuerungstransaktion 36 oder ein Smart-Contract erzeugen ein Steuersignal. Die Netzwerk-Applikation und/oder die Teststeuerungstransaktion 36 die der Smart-Contract oder die Schutzlogik 34 und/oder weitere Komponenten des in Fig. 9 gezeigten Systems können das Testmodul ganz oder teilweise umfassen, je nachdem welche Komponente z. B. welche Funktion des Testmoduls implementiert ist.

Je nachdem welche der Komponenten das Signal erzeugt und an welche Komponente das Signal übermittelt wird, kann das Steuersignal unterschiedlich implementiert sein. Erzeugt beispielsweise die Netzwerk-Applikation oder die Teststeuerungstransaktion 36 oder der Smart-Contract das Steuersignal, kann das Steuersignal als Testsignal 38 realisiert sein. Erzeugt die Schutzlogik 34 das Steuersignal, kann das Steuersignal als Auslösesignal 39 realisiert sein.

Wird z. B ein Testsignal 38 erzeugt, so wird dies auf die Schutzlogik 34 aufgeschaltet. Als Ergebnis steht dann z. B. ein Auslösesignal 39 zur Verfügung.

Das bei einem Test oder bei einer Überprüfungs erzeugte Steuersignal ist dabei vorzugsweise spezifisch für einen Test oder eine Überprüfung einer Funktion der am Schutzkreis beteiligten Geräte und/oder der im Schutzkreis integrierten Geräte selbst.

Der Schutzkreis umfasst den Sensor 43 und/oder 45, wobei die Sensoren 43 und/oder 45 Messdaten 40a und 40b liefern. Der Sensor 43 liefert z. B. Messdaten aus dem zu überwachenden Prozess, die für einen entsprechenden Test z. B. auch simuliert sein können. Der Sensor 45 liefert z. B. Messdaten, die als Reaktion auf das Steuersignal (z. B. ein Testsignal) und/oder den Eintritt der Schutzwirkungerfasst werden können.

Diese Messdaten 40a, 40b werden dabei durch das Testmodul erfasst, wobei die Sensoren 43, 45 z. B. über einen Bus oder Ein- und Ausgabebaugruppen IF mit dem Testmodul kommunikativ verbunden sind oder die Sensoren 43, 45 übermitteln die Messdaten 40a, 40b z. B. direkt an das Testmodul. Für eine solche Datenkommunikation oder weitere Kommunikation zwischen den Komponenten des Systems, des technischen Systems, der Netzwerk-Applikation umfasst das gezeigte System mehrere Datenschnittstellen IF, um einen entsprechenden Datenaustausch zu realisieren.

Beispielsweise wird mit dem Auslösesignal 39 der pneumatische Stellantrieb 44 betätigt und das Dampfschnellschulssventil geschlossen.

Alternativ oder zusätzlich steuern das Auslösesignal 39 bzw. das Steuersignal eine Entität an mittels der der pneumatische Stellantrieb 44 bzw. der entsprechende Test ausgeführt werden kann.

In einer weiteren Variante wird der Test halbautomatisch durchgeführt, indem die Entität ein Rechner ist, der einem Testnutzer anzeigt, dass die Schutzwirkung des Schutzkreises "Überdrehzahl" gestestet werden soll. Dazu wird durch den Testnutzer der Stellantrieb des Schnellschulssventils verfahren und mittels des Sensors 45 (z. B. ein Stellungsgeber) erfasst.

Anschließend wird ein Prüfergebnis anhand der Messdaten und der entsprechenden Referenzdaten ermittelt. Dieses Ermitteln kann beispielsweise durch das Testmodul oder die Teststeuerungstransaktion 36 erfolgen. Bei diesem Prüfen wird z. B. ermittelt, ob die Messdaten die Referenzdaten einhalten, unterschreiten oder überschreiten. Stimmen die Messdaten mit den Referenzdaten überein, gilt ein entsprechender Test bzw. Prüfung als bestanden. Weichen die Messdaten von den Referenzdaten, z. B. um einen erlaubten Toleranzwert ab, kann ein entsprechender Test bzw. Prüfung als bestanden bewerten werden und im Prüfergebnis gespeichert werden. Weichen die Messdaten beispielsweise von den Referenzdaten ab und/oder überschreiten einen ensprechenden Toleranzwert, so gilt ein entsprechender Test oder eine entsprechende Prüfungs als nicht bestanden und wird vorzugsweise im Prüfergebnis gespeichert.

Anhängig von dem Prüfergebnis wird das technische System gesteuert und/oder das Gerät gesteuert und/oder eine Steuerfunktion ausgeführt. Erfüllt das Gerät beispielsweise die Vorgaben, die durch die Referenzdaten vorgegeben sind, wird das technische System und/oder das Gerät in einem betriebsbereiten Zustand versetzt. Mit anderen Worten wird das technische System und/oder das Gerät bei einem bestandenen Test z. B. in Betrieb genommen oder mittels der Steuerfunktion wird ein Betriebsmodus des Gerätes oder des technischen Systems für eine Nutzung freigeschaltet oder die Betriebsfreigabe um ein weiteres Intervall verlängert.

Es können in Varianten der Erfindung auch mehrere Prüfungen oder Tests für das Geräte und/oder weitere Geräte des technischen Systems ausgeführt werden und in dem Prüfergebnis gespeichert werden. Erst wenn z. B. eine vorgegebene Anzahl von Prüfungen oder Tests (z. B. 100 % aller Prüfungen oder Tests oder 80 % aller Tests) und/oder vorgegebene spezifische Tests oder Prüfungen (z. B. sicherheitskritische Tests müssen zu 100 % bestanden sein) erfüllt sind, wird das das technische System gesteuert und/oder das Gerät gesteuert und/oder eine Steuerfunktion ausgeführt. Beispielsweise wird erst dann das technische System und/oder das Gerät in einen Betriebsmodus versetzt, das deren Nutzung (z. B. regulärer operativer Betrieb) erlaubt. Dies kann beispielsweise bei einer Kraftwerksanlage das Freischalten von Steuerfunktionen sein, die ein Anfahren das Kraftwerkes erlauben, damit dieses auch auf voller Last oder in den regulären Netzbetrieb gehen kann.

Bei den Messdaten 40a, 40b der Sensoren 43, 45 kann es sich beispielsweise um ein jeweiliges Rückmeldesignal handeln. Die Messdaten 40a, 40b können ein entsprechenden Rückmeldesignal kodieren, umfassen oder als ein entsprechenden Rückmeldesignal ausgbildet oder realisiert sein.

In Varianten werden die Messdaten 40a, 40b erfasst und zur Aktualisierung der Netzwerk-Applikation (z. B. der Blockchain 35) verwendet, indem z. B. die entsprechenden Messdaten 40a, 40b in einem Rückmeldesignal 40 gespeichert werden und von der Schutzlogik 34 oder dem Testmodul an die Teststeuerungstransaktion 36 oder die Netzwerk-Applikation übertragen wird. Hierzu können beispielsweise zunächst die Messdaten 40a, 40b an die Schutzlogik 34 oder das Testmodul übertagen werden. Die Schutzlogik 34 oder das Testmodul speichern die Messdaten 40a und/oder die Messdaten 40b und/oder das Prüfergebnis im Rückmeldesignal 40 und übertragen es z. B. an die Teststeuerungstransaktion 36 oder die Netzwerk-Applikation.

Im Rückmeldesignal 40 bzw. der Kommunikation zwischen Schutzlogik 34 und Teststeuerungstransaktion 36 und/oder der Netzwerk-Applikation kann z. B. zur Dokumentation und Archivierung auch testbegleitende Information (z.B. Identifikations- und Diagnosedaten der Ablaufumgebung 41 der Schutzlogik) enthalten sein.

In weiteren Varianten wird als Reaktion auf die Messdaten 40a, 40b in der der Netzwerk-Applikation (z. B. die Blockchain 3) das Testergebnis (das auch als Prüfergebnis bezeichnet werden kann) archiviert.

In weiteren Varianten wird beispielsweise das Prüfergebnis in einer Bestätigungstransaktion gespeichert. Zusätzlich oder alternativ werden beispielsweise die Messdaten in einer Messdatentransaktion gespeichert. Zusätzlich oder alternativ wird beispielsweise das Prüfergebnis anhand der Messdaten der Messdatentransaktion berechnet. Zusätzlich oder alternativ ist/sind beispielsweise die Bestätigungstransaktion und/oder die Messdatentransaktion und/oder Teststeuerungstransaktion mittels eines jeweiligen proof-of-authority Nachweises gesichert. Zusätzlich oder alternativ sind beispielsweise die Bestätigungstransaktion und/oder die Messdatentransaktion und/oder Teststeuerungstransaktion in einem jeweiligen Datenblock gespeichert. Zusätzlich oder alternativ umfasstbeispielsweise der jeweilige Datenblock den jeweiligen proof-of-authority Nachweis der entsprechenden Transaktion.

Das Prüfergebnis kann beispielsweise mittels einer entsprechenden Bestätigungstransaktion gespeichert werden und kann beispielsweise einer entsprechende Entität (z. B. eine zu notifizierende Stelle oder eine vertrauenswürdige Entität) als Nachricht P oder als die Bestätigungstransaktion übermittelt werden (z. B. in Schritt S13 bzw. der Daten von Schritt S13 aus Fig. 10).

In einer weiteren Variante umfasst das System ein Monitoringmodul, wobei das Monitoringmodul dazu eingerichtet ist, die Aktivitäten des System und/oder des Testmoduls in einer Protokolldatei oder einem Datensatz oder in Transaktionen zu speichern.

Beispielsweise kann die Erfindung wie folgt eingesetzt werden. Da die Zeit zur erneuten Prüfung des technischen Systems (z. B. einer Kraftwerksanlage) gemäß Festlegung durch den TÜV abläuft, ist ein erneuter erfolgreicher Funktionstest nachzuweisen.

Ein dem Schutzkreis zugeordneter smart contract (z. B. die Teststeuerungstransaktion 36) existiert, der gemäß Vorgaben der zertifizierten Stelle (TÜV) die Anforderungen bezüglich Auslösesignal und Schutzwirkung, sowie Zeitvorgabe und ggfs. Beiwerten (z.B. Schutzsystem ohne Störung) verarbeiten kann. Hierzu umfasst die Teststeuerungstransaktion 36 die dafür notwendigen Steuerbefehle und Referenzdaten. Zusätzlich kann die Teststeuerungstransaktion 36 das Testmodul umfassen oder das Testmodul ansteuern.

Die Teststeuerungstransaktion 36 hat im Ausgangszustand die Auslösung der Schutzlogik nicht gesetzt (S1). Die Rückmeldung der Schutzlogik zum smart contract ist: Schutz nicht angesprochen (S1a). Die Anlage ist also nicht blockiert und bereit für einen Funktionstest.

### Prüfvorgang:

Ein autorisierter Tester AT1, z. B. ein Mitarbeiter der zertifizierten Stelle oder eine Prüfsoftware, aktiviert über die Datenschnittstelle I (z. B. ein Webinterface) den Prüfmodus (Testauslösesignal 37).

Der für den Überdrehzahlschutz aktive Smart-Contract (kann auch als Programmcode, Programmbefehle oder Chain-Code bezeichnet werden) der Teststeuerungstransaktion 36 aktiviert einen Timer (z.B. 30 Minuten Prüffenster) und wartet auf die Rückmeldung, dass der Schutz angesprochen hat ("Drehzahl > X" Messdaten 40a des Sensors 43) und die Schutzwirkung eingetreten ist ("Schnellschlussventil Rückmeldung Zu" Messdaten 40b des Sensors 45). Hierzu kann z. B. der Smart-Contract bzw. die Teststeuerungstransaktion 36 mit dem Smart-Contract ausgeführt werden und das Testmodul wie oben angesteuert werden.

Zusätzlich überprüft der Smart-Contract und/oder die Teststeuerungstransaktion 36 und/oder das Testmodul anhand der Zeitstempel der Messdaten 40a, 40b, ob die Reaktion innerhalb der Referenzdaten, also der vorgegebenen Referenzzeit (z.B. 10 Sekunden) erreicht wurde.

Beispielsweise kann eine weitere Entität AT2 (z. B. eine Person, ein angesteuertes Gerät oder eine Softwarekomponente) den Schutz durch reales Erzeugen des kritischen Prozesszustands im Stillstand der Anlage oder durch Simulation am Sensor 43 auslösen (S2).

Das in der Schutzlogik 34 registrierte Auslösesignal (S3) wird dem Smart-Contract und/oder der Teststeuerungstransaktion 36 und/oder dem Testmodul übertragen (S4). Die Schutzlogik 34 spricht an und löst den Schutzbefehl (S5 Befehl "ZU" Signal 39) aus. - Das Ventil soll also geschlossen sein/werden um die Drehzahl der Turbine zu senken), indem der Schutzbefehl zum Stellorgan 44 (z. B. zum Stellantrieb des Dampf- Schnellschlussventils) übertragen wird (S5). Zusätzlich überträgt die Schutzlogik die erfolgte Auslösung (S6) and die Teststeuerungstransaktion 34. Das Dampf-Schnellschlussventil fährt zu und der Stellungsgeber 45 meldet "ZU" (S7 = Messdaten 40b) an die Schutzlogik und/oder die Teststeuerungstransaktion 36 und/oder das Testmodul (S8) zurück. Die Rückmeldung ob ein sicherer Zustand angefordert und erreicht wurde, wird also durch die Sensoren 43, 45 und die entsprechenden Messdaten 40a, 40b erfasst. Dies kann z. B. abhängig von der gewählten Implementierung auch an den Smart Contract und/oder die Teststeuerungstransaktion 36 und/oder das Testmodul übertragen werden. Der Smart Contract und/oder die Teststeuerungstransaktion 36 und/oder das Testmodul berechnen dann das Prüfergebnis unter Einbezug der Referenzdaten.

Beim Überprüfen bzw. Berechnen kann es zu nachfolgendenden Ergebnissen kommen, die vorzugsweise im Prüfergebnis gespeichert und/oder das technische System abhängig vom Prüfergebnis steuern und/oder eine Steuerfunktion ausführt:

### Erfolgreich:

Wenn Auslösung (Messdaten 40a) und Schutzwirkung (Messdaten 40b) innerhalb der vorgegebenen Referenzzeit (z. B. 20 Sekunden) in der richtigen Reihenfolge von 0 auf 1 wechseln, erfolgt die Dokumentation (mit Zeitstempeln) einer erfolgreichen Prüfung (S13) - mit anderen Worten die Messdaten 40a, 40 b weisen die Einhaltung der Vorgaben (Referenzdaten) nach. Diese Auswertung wird vorzugsweise durch das Testmodul vorgenommen.

Die Funktionsfreigabe des Schutzkreises durch den Smart-Contract und/oder die Teststeuerungstransaktion 36 und/oder das Testmodul bleibt erhalten bis zur nächsten wiederkehrenden Prüfung. Dazu wird die Freigabe in der Schutzlogik gesetzt(S9). Dies wird vorzugsweise durch das Ausführen der Steuerfunktion abhängig von dem Prüfergebnis gesteuert.

### Test nicht abgeschlossen:

Wenn die Zeit des Prüffensters (z. B. 30 Minuten) verstrichen ist und kein Auslösesignal (38 bzw. 40a) im Smart-Contract und/oder in der Teststeuerungstransaktion 36 und/oder in dem Testmodul registriert wird (S4), erfolgt die Dokumentation einer verstrichenen Prüfung (z. B. durch ein Erzeugen oder Speichern entsprechender Transaktionen in der Netzwerk-Applikation) (S13). Die Prüfung kann z. B. wiederholt werden (37). Wird über den Smart-Contract und/oder die Teststeuerungstransaktion 36 und/oder das Testmodul z. B. nicht rechtzeitig (z. B. ein vorgebener Zeitraum für das Ablegen eines erfolgreichen Tests überschritten) ein erfolgreicher Test gemeldet (S10), erhält eine weitere Entität AT3 (z. B. eine zertifizierte Stelle) eine entsprechende Meldung und wird aktiv (S13). Ist der wiederholte Test erfolgreich wird die weitere Entität über diesen wiederholten erfolgreichen Test informiert (S13). Dies kann beispielsweise mittels entsprechender Transaktionen der Netzwerk-Applikation erfolgen und/oder dokumentiert werden. Die weitere Entität AT3 kann beispielsweise eine Software oder eine Person einer Zertifizierungsstelle sein, die ggf. abhängig von dem Prüfergebnis das technische System steuert und/oder eine Steuerfunktion für das technische System ausführt oder freigibt.

### Test nicht erfolgreich:

Wenn der Test nicht korrekt abgeschlossen wird, kann eine Maßnahmen sein, dass der Schutzbefehl durch den Smart Contract dauerhaft ausgelöst bleibt, so dass das Schnellschlussventil nicht mehr AUF fahren kann. Dies kann beispielsweise mittels des Ausführens der Steuerfunktion abhängig vom Prüfergebnis realisiert sein (S10) der die Schutzwirkung (Schnellschlussventil Befehl "ZU") erzwingt. Somit ist durch die Schutzlogik 34 z. B. die Anlage blockiert. Dieser Zustand wird beispielsweise der Teststeuerungstransaktion 36 und/oder dem Testmodul übermittelt (S12) und dort dokumentiert bzw. überwacht.

Nun kann z. B. zur Aufhebung des Schutzbefehls (S11) durch einen Rücksetzmechanismus im Smart Contract und/oder in der Schutzlogik und/oder in der Teststeuerungstransaktion 36 und/oder in dem Testmodul die Anlage wieder freigegeben werden.

Da die Meldung eines nicht erfolgreichen Tests in der Blockchain gespeichert und an die Verantwortlichen übertragen wird (z. B. Entität AT3), kann die Fehlersuche und Fehlerkorrektur unter Aufsicht durchgeführt werden.

Der Smart-Contract und/oder die Teststeuerungstransaktion 36 und/oder das Testmodul kann beispielsweise so ausgeprägt sein, dass das Rücksetzen im Smart-Contract und/oder in der Teststeuerungstransaktion 36 und/oder in dem Testmodul nur durch die zugeordnete Behörde bzw. durch die zertifizierte Stelle (z. B. der weiteren Entität AT3) möglich ist (Schlüsselverwaltung und Autorisierung in der Blockchain). Dies kann beispielsweise mittels entsprechender Transaktionen der Netzwerk-Applikation erfolgen und/oder dokumentiert werden.

In einer weiteren Variante umfasst der Sensor 43 und/oder der Sensor 45 einen Prozessor oder einen Mikrokontroller, um simulierte Sensordaten 40a, 40b zu erzeugen und das technische System, das Gerät oder eine Reaktion des technischen Systems oder des Gerätes auf simulierten Sensordaten 40a, 40b zu testen. Ein Sensor mit einem Prozessor oder Mikrokontroller kann beispielsweise auch als intelligenter Sensor bezeichnet werden. Mit anderen Worten betrifft diese Variante z. B. ein computerimplementiertes Verfahren wobei ein Testsignal 38 bzw. ein Steuersignal von dem Smart Contract und/oder der Teststeuerungstransaktion 36 und/oder dem Testmodul bereitgestellt wird, wobei vorzugsweise die Teststeuerungstransaktion 36 und/oder das Testmodul den Smart-Contract umfasst.

Es wird beispielsweise von dem Smart Contract selbst das Testsignal oder Steuersignal erzeugt. Es bedarf also keines weiteren Eingriffs, um z.B. manuell ein Testsignal auszulösen. Vielmehr wird das Testsignal automatisch erzeugt.

Es kann beispielsweise der Sensor 43 durch einen intelligent ausgebildeter Sensor 43, wie z. B. ein intelligentes Druckmessgerät mit einer Simulationsfunktion ersetzt worden sein. Damit kann beispielsweise der Sicherheitskreis 27 überwacht werden, der im vorliegenden Ausführungsbeispiel zusätzlich einen Aktuator, wie z.B. ein Dampfschnellschlussventil umfasst, und einen Sensor 45, wie z.B. ein Sensor zur Erfassung einer Endlage, aufweist.

In einer weiteren Ausführung wird der Test durch den Smart contract automatisch ausgelöst:
In einem geeigneten Zustands des technischen Systems (z.B. Stillstand), der dem Smart-Contract aus der Schutzlogik signalisert wird, triggert ein Testauslösesignal 37 den Smart-Contract 36 automatisch. Mittels des Smart-Contracts bzw. der Teststeuerungstransaktion wird die Schutzlogik und/oder das Testmodul derart angesteuert, dass dadurch ein Testsignal 38 erzeugt wird. Hierdurch wird dann ggfs. der Schutz über die Schutzlogik 34 ausgelöst. Die erfolgreiche Schutzwirkung wird in der Schutzlogik und/oder dem Testmodul registriert und daraufhin z. B. ein die entsprechenden Messdaten in der Netzwerk-Applikation (z. B. die Blockchain) gespeichert.

Eine Funktionsprüfung für einen Überdrehzahlschutz mit automatischer Auslösung mittels der intelligenten Sensoren kann wie folgt realisiert sein:

### Ausgangszustand:

Da die Zeit zur erneuten Prüfung gemäß Festlegung durch den TÜV abläuft, ist ein erneuter erfolgreicher Funktionstest nachzuweisen.

Ein dem Schutzkreis bzw. dem Gerät zugeordneter Smart Contract existiert, der gemäß Vorgaben der zertifizierten Stelle (TÜV) die Anforderungen bezüglich Auslösesignal und Schutzwirkung, sowie Zeitvorgabe und ggfs. Beiwerten (z.B. Schutzsystem ohne Störung und technisches System im Stillstand) verarbeiten kann. Dies ist vorzugsweise in den Referenzdaten und Steuerbefehlen der Teststeuerungstransaktion kodiert. Entsprechend kann die Teststeuerungstransaktion den Smart-Contract umfassen oder diesem entsprechen.

Der Smart-Contract hat im Ausgangszustand die Auslösung der Schutzlogik bzw. des Gerätes nicht gesetzt. Die Rückmeldung der Schutzlogik zum Smart Contract ist: Schutz nicht angesprochen. Die Anlage ist also nicht blockiert und bereit für einen Funktionstest.

### Ablauf Prüfvorgang:

Ein autorisierter Tester z. B. Mitarbeiter der zertifizierten Stelle (z. B. Entität AT1) aktiviert über die Datenschnittstelle I (z. B. eine Kommunikationsschnittstelle) den Prüfmodus mit dem entsprechenden Signal 37.

Der Smart Contract löst - z. B. über die Schutzlogik eine Simulation 38 im Sensor 45 (z. B. als intelligenter Sensor ausgebildet) zur Auslösung des Schutzes aus und setzt zeitgleich einen Timer (z.B Prüffenster 10 Minuten), der den Prüfvorgang überwacht und nach Ablauf einer definierten Zeit oder nach dem Ende des Tests die Simulation zurücknimmt. Der Sensor 45 liefert der Schutzlogik und/oder dem Testmodul nun Messdaten, die den unzulässigen Prozesszustand simulieren. Die Schutzlogik reagiert auf diese simulierten Messdaten und die Reaktion des Schutzsystems auf diese simulierten Messdaten wird wie beschrieben überwacht.

Der Smart-Contract überwacht somit nun anhand der Rückmeldungen, ob der Schutz angesprochen hat ("Drehzahl >X" Signal 40a) und die Schutzwirkung eingetreten ist ("Schnellschlussventil Rückmeldung Zu" Signal 40b).

Zusätzlich überprüft der Smart Contract anhand der Zeitstempel der Signale, ob die Reaktion innerhalb der vorgegebenen Zeit erreicht wurde.

Beispielsweise wird das in der Schutzlogik bewirkte Auslösesignal 39 auch an den Smart Contract übertragen. Die Schutzlogik spricht an löst den Schutzbefehl aus (Befehl ZU 39). Das Dampf Schnellschlussventil fährt zu und meldet "ZU" (Signal 40b) an die Schutzlogik zurück. Dies wird auch an den Smart-Contract übertragen.

### Erfolgreich:

Wenn Auslösung (40a) und Schutzwirkung (40b) innerhalb der vorgegebenen Zeit in der richtigen Reihenfolge von 0 auf 1 wechseln, erfolgt die Dokumentation (mit Zeitstempeln) einer erfolgreichen Prüfung. Der Smart Contract setzt die Funktionsfreigabe des Schutzkreises. Die Simulation in der Funktionslogik wird zurückgesetzt.

Beispielsweise kann für eine Simulation im Sensor oder im Testmodul ein elektrischer Messwert erzeugt (HART-Simulation). Die Drehzahl der Turbine ist dabei = 0. Der Geber bzw. der entsprechende Sensor liefert jedoch dann z. B. 12mA z.B. 10000 U/Min und dies löst den Schutz bzw. eine entsprechende Sicherheitsfunktion aus.

Die Funktionsfreigabe des Schutzkreises durch den Smart-Contract 36 bleibt erhalten bis zur nächsten wiederkehrenden Prüfung.

### Test nicht erfolgreich:

Wenn Ursache und Wirkung nicht in der richtigen Reihenfolge und Zeitintervall erreicht wird oder wenn die Zeit des Prüffensters (10 Minuten) verstrichen ist und kein Auslösesignal 40a im Smart Contract registriert wird, liegt ein Fehler vor, da z.B. die Simulation nicht angesprochen hat. Diese entsprechenden Vorgaben können beispielsweise in den Referenzdaten gespeichert sein.

Eine Maßnahmen kann sein, dass der Schutzbefehl durch den Smart-Contract dauerhaft ausgelöst wird, so dass das Schnellschlussventil nicht mehr AUF fahren kann. Nach Fehlerbehebung muss durch einen Rücksetzmechanismus im Smart Contract und in der Schutzlogik die Anlage wieder freigegeben werden.

Da die Meldung eines nicht erfolgreichen Tests in der Blockchain gespeichert und an die Verantwortlichen übertragen wird, kann die Fehlersuche und Fehlerkorrektur unter Aufsicht durchgeführt werden.

Der smart contract kann so ausgeprägt sein, dass das Rücksetzen im smart contract nur durch die zugeordnete Behörde bzw. durch die zertifizierte Stelle möglich ist (Schlüsselverwaltung und Autorisierung in der Blockchain).

### Weitere Ausführungsformen sind nachfolgend dargestellt:

Eine Vorrichtung oder ein System zur Prüfung eines/des technischen Systems, insbesondere für eine Konformitätsverfolgung, aufweisend:
- beispielsweise ein Lademodul, wobei
   ∘ beispielsweise das Lademodul zum Laden und/oder Ausführen einer Teststeuerungstransaktion eingerichtet ist,
   ∘ beispielsweise die Teststeuerungstransaktion aus einer Netzwerk-Applikation geladen wird,
   ∘ beispielsweise die Teststeuerungstransaktion Steuerbefehle und Referenzdaten umfasst;
- beispielsweise ein Testmodul, wobei
   ∘ beispielsweise das Testmodul dazu eingerichtet ist mittels der Steuerbefehle gesteuert zu werden,
   ∘ beispielsweise die Steuerbefehle das Testmodul derart ansteuern, dass ein Testsignal für ein Subsystem des technischen Systems erzeugt wird;
- beispielsweise ein Erfassungsmodul, wobei
   ∘ beispielsweise das Erfassungsmodul zum Erfassen von Messdaten für das Subsystem als Reaktion auf das Testsignal eingerichtet ist,
   ∘ beispielsweise die Messdaten durch das Testmodul erfasst werden,
   ∘ beispielsweise die Messdaten durch einen Sensor des Testmoduls erfasst werden;
   ∘ beispielsweise das Erfassungsmodul der Sensor ist;
- beispielsweise ein Berechnungsmodul, wobei beispielsweise das Berechnungsmodul zum Berechnen eines Prüfergebnisses anhand der Messdaten und der Referenzdaten eingerichtet ist;
- beispielsweise ein Steuermodul, wobei beispielsweise das Steuermodul zum Steuern des technischen Systems abhängig von dem Prüfergebnis und/oder Ausführen einer Steuerfunktion abhängig von dem Prüfergebnis eingerichtet ist.

Das Lademodul und/oder das Testmodul und/oder das Berechnungsmodul und/oder Steuermodul können beispielsweise als separate Hardware- und/oder Softwaremodule realisiert sein. Alternativ oder zusätzlich sind diese Module als Smart-Contract ausgebildet und können beispielsweise von der Schutzlogik und/oder der Teststeuerungstransaktion ganz oder teilweise realisiert sein.

In einer weiteren Variante wird das Erfassungsmodul durch die Sensoren 43, 45 gebildet.

In einer weiteren Variante wird das Berechnungsmodul und/oder das Steuermodul durch das Testmodul und/oder die Schutzlogik gebildet (in vorhergehenden Ausführungsbeispielen erläutert).

In einer weiteren Variante wird das Lademodul durch das Testmodul und/oder die Netzwerk-Applikation realisiert (in vorhergehenden Ausführungsbeispielen erläutert).

In einer weiteren Variante umfasst das System oder die Vorrichtung ein Monitoringmodul, wobei das Monitoringmodul dazu eingerichtet ist, die Aktivitäten des System und/oder des Testmoduls in einer Protokolldatei oder einem Datensatz oder in Transaktionen zu speichern.

Die Vorrichtung oder das System (oder auch die anderen Ausführungsbeispiele und ihre Varianten) können beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Ein weiteres Ausführungsbeispiels betrifft ein computerimplementiertes Verfahren zum Bereitstellen von Daten, insbesondere für eine Konformitätsverfolgung, in einem verteilten peer-to-peer Netz (1), mit den Schritten:
- Bereitstellen zumindest eines ersten Datenblocks (4a), insbesondere mit Daten repräsentativ für die Konformitätsverfolgung, zum Generieren einer Blockchain (3) mit einer ersten Prüfsumme (6a) durch eine erste Instanz (5a) des peer-to-peer Netzes (1),
- Bereitstellen zumindest eines proof-of-authority Nachweises (10) zum Verifizieren eines weiteren Datenblocks (4b, 4c),
- Erzeugen des weiteren Datenblocks (4b, 4c) repräsentativ für eine Konformitätsverfolgung mit einer weiteren Prüfsumme (6b, 6c) und zumindest der ersten Prüfsumme (6a) durch eine weitere Instanz (5b, 5c) des peer-to-peer Netzes (1),
- Prüfen des proof-of-authority Nachweises (10),
- Hinzufügen des weiteren Datenblocks (4b, 4c) zum ersten Datenblock (4a) bei erfolgreicher Prüfung des proof-of-authority Nachweises (10), um die Blockchain (3) zu bilden, und
- Bereitstellen der Blockchain (3) in dem verteilten peer-to-peer Netz (1),
wobei einer der Datenblöcke (4a, 4b, 4c) als ein Smart Contract (36, 29a, 29b, 29c) ausgebildet ist, der auf Vorliegen eines vorbestimmten Fehlerfalls eine Fehlerbehandlungsmaßnahme bereitstellt und/oder auf Vorliegen eines Testauslösesignals (37) eine Funktionsprüfung auslöst.

In einer Variante der Ausführungsform fordert das computerimplementiertes Verfahren das Testauslösesignal (37) ein Testsignal (38) an.

In einer Variante der Ausführungsform wird das Testsignal (38) von dem Smart Contract (36, 29a, 29b, 29c) bereitgestellt wird.

In einer Variante der Ausführungsform stellt der Smart Contract (36, 29a, 29b, 29c) ein Rücksetzsignal (42) bereit.

In einer Variante der Ausführungsform umfasst der Smart Contract (29a, 29b, 29c) ein Rückmeldesignal (40).

In einer Variante der Ausführungsform ist das peer-to-peer Netz (1) ein privates Netz.

In einer Variante der Ausführungsform hat der proof-of-authority Nachweis (10) zumindest eine zeitlich begrenzte Gültigkeitsdauer.

In einer Variante der Ausführungsform hat der proof-of-authority Nachweis (10) zumindest eine inhaltliche Gültigkeit.

In einer Variante der Ausführungsform hat der proof-of-authority Nachweis (10) zumindest eine nutzerbezogene Gültigkeit.

In einer Variante der Ausführungsform ist ein Datenblock (4a, 4b, 4c) als Smart Contract ausgebildet, wobei der Smart Contract auf Vorliegen einer vorbestimmten Bedingung den proof-of-authority Nachweis (10) bereitstellt.

In einer Variante der Ausführungsform ist eine Heilungsfunktion vorgesehen, zum Ändern und/oder Kennzeichnen von zumindest einem der Datenblöcke (4a, 4b, 4c).

Eine weitere Auführungsform betrifft ein System zum Bereitstellen von Daten, wobei das System Mittel zur Ausführung der Schritte des Verfahrens nach der vorher genannten Ausführungsform und/oder eine seiner Varianten.

Eine weitere Auführungsform betrifft ein Computerprogrammprodukt, umfassend Befehle, die bei der Ausführung des Programms durch einen Computer diesen veranlassen, zumindest einen der Schritte der genannten Ausführungsform und/oder eine seiner Varianten auszuführen, wobei der Computer der ersten Instanz (5a) zugeordnet ist.

Eine weitere Auführungsform betrifft ein Computerprogrammprodukt, umfassend Befehle, die bei der Ausführung des Programms durch einen Computer diesen veranlassen, zumindest einen der Schritte der genannten Ausführungsform und/oder eine seiner Varianten auszuführen, wobei der Computer einer der weiteren Instanzen (5b, 5c) zugeordnet ist.

Eine weitere Auführungsform betrifft ein Computerprogrammprodukt, umfassend Befehle, die bei der Ausführung des Programms durch einen Computer diesen veranlassen, zumindest einen der Schritte genannten Ausführungsform und/oder eine seiner Varianten eines Smart Contracts (29a, 29b, 29c) auszuführen.

Durch Scannen bzw. Aufnahme und Bildverarbeitung kann eine Vielzahl an Merkmalen erfasst werden (Werkstoffkennzeichen, Fertigungsmarken, etc.), die eine mit Smart Contracts 29a, 29b, 29c automatisierte Prüfung bzw. Zertifizierung realisiert.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird
   "The Swirlds Hashgraph Consensus Algorithm: Fair, Fast, Byzantine Fault Tolerance",
   Swirlds Tech Report SWIRLDS-TR-2016-01, 31.5.2016
[7] Leemon Baird
   "Overview of Swirlds Hashgraph",
   31.5.2016
[8] Blockchain Oracles https://blockchainhub.net/blockchain-oracles/ Stand 14.03.2018

## Patentansprüche

1. Computerimplementiertes Verfahren zur Prüfung eines technischen Systems, für eine Konformitätsverfolgung mit den Schritten:
- Laden und/oder Ausführen einer Teststeuerungstransaktion, wobei
∘ die Teststeuerungstransaktion einen Smart-Contract umfasst oder ein Smart-Contract ist,
∘ ein Testauslösesignal (37) das Laden und Ausführen der Teststeuerungstransaktion anfordert,
∘ insbesondere die Teststeuerungstransaktion aus einer Netzwerk-Applikation geladen wird,
∘ die Teststeuerungstransaktion Steuerbefehle und Referenzdaten umfasst;
- Steuern eines Testmoduls, wobei
∘ die Steuerbefehle das Testmodul derart ansteuern, dass ein Testsignal für ein Subsystem des technischen Systems erzeugt wird;
- Erfassen von Messdaten für das Subsystem als Reaktion auf das Testsignal, wobei
∘ die Messdaten durch das Testmodul erfasst werden,
∘ insbesondere die Messdaten durch einen Sensor des Testmoduls erfasst werden;
- Berechnen eines Prüfergebnisses wobei
∘ anhand der Messdaten und der Referenzdaten ein Prüfergebnis berechnet wird,
- Steuern des technischen Systems abhängig von dem Prüfergebnis und/oder Ausführen einer Steuerfunktion abhängig von dem Prüfergebnis
wobei
- das Prüfergebnis in einer Bestätigungstransaktion gespeichert wird,
- die Messdaten in einer Messdatentransaktion gespeichert werden,
- das Prüfergebnis anhand der Messdaten der Messdatentransaktion berechnet wird,
- die Bestätigungstransaktion, die Messdatentransaktion und die Teststeuerungstransaktion mittels eines jeweiligen proof-of-authority Nachweises gesichert sind,
- die Bestätigungstransaktion, die Messdatentransaktion und die Teststeuerungstransaktion in einem jeweiligen Datenblock einer Blockkette gespeichert sind,
- Zusatz-/Metadaten zur Prüfung in einer Bestätigungstransaktion gespeichert werden, und
- der jeweilige Datenblock den jeweiligen proof-of-authority Nachweis der entsprechenden Transaktion umfasst.

2. Computerimplementiertes Verfahren nach Anspruch 1, wobei abhängig von dem Prüfergebnis ein Rücksetzsignal (42) für das Subsystem bereitgestellt wird oder die Steuerfunktion abhängig von dem Prüfergebnis ein Rücksetzsignal (42) für das Subsystem bereitstellt.

3. Computerimplementiertes Verfahren nach einem der Ansprüche 1 oder 2, wobei abhängig von dem Prüfergebnis ein Rückmeldesignal (40) für das Subsystem bereitgestellt wird oder die Steuerfunktion abhängig von dem Prüfergebnis ein Rückmeldesignal (40) für das Subsystem bereitstellt.

4. Computerimplementiertes Verfahren nach einem der vorhergehenden Ansprüche, wobei
- die Netzwerk-Applikation in einem peer-to-peer Netz (1) ausgeführt wird oder durch das peer-to-peer Netz (1) ausgeführt wird,
- insbesondere das peer-to-peer Netz (1) ein privates Netz ist.

5. Computerimplementiertes Verfahren nach einem der vorhergehenden Ansprüche, wobei der proof-of-authority Nachweis (10) zumindest eine zeitlich begrenzte Gültigkeitsdauer hat.

6. Computerimplementiertes Verfahren nach einem der vorhergehenden Ansprüche, wobei der proof-of-authority Nachweis (10) zumindest eine inhaltliche Gültigkeit hat.

7. Computerimplementiertes Verfahren nach einem der vorhergehenden Ansprüche, wobei der proof-of-authority Nachweis (10) zumindest eine nutzerbezogene Gültigkeit hat.

8. Computerimplementiertes Verfahren nach einem der vorhergehenden Ansprüche, wobei ein Datenblock (4a, 4b, 4c) als Smart Contract ausgebildet ist, der auf Vorliegen einer vorbestimmten Bedingung den proof-of-authority Nachweis (10) bereitstellt.

9. Computerimplementiertes Verfahren nach einem der vorhergehenden Ansprüche, wobei eine Heilungsfunktion vorgesehen ist zum Ändern und/oder Kennzeichnen von zumindest einem der Datenblöcke (4a, 4b, 4c).

## Claims

1. A computer-implemented method for testing a technical system for conformity tracking, comprising the steps of:
- loading and/or executing a test control transaction, wherein
∘ the test control transaction comprises or is a smart contract,
∘ a test trigger signal (37) requests loading and executing the test control transaction,
∘ in particular, the test control transaction is loaded from a network application,
∘ the test control transaction comprises control commands and reference data;
- controlling a test module, wherein
∘ the control commands control the test module such that a test signal is generated for a subsystem of the technical system;
- acquiring measurement data for the subsystem in response to the test signal, wherein
∘ the measurement data is acquired by the test module,
∘ in particular, the measurement data is acquired by a sensor of the test module;
- calculating a test result, wherein
∘ a test result is calculated on the basis of the measurement data and the reference data,
- controlling the technical system depending on the test result, and/or executing a control function depending on the test result,
wherein
- the test result is stored in a confirmation transaction,
- the measurement data is stored in a measurement data transaction,
- the test result is calculated on the basis of the measurement data of the measurement data transaction,
- the confirmation transaction, the measurement data transaction, and the test control transaction are secured by means of a respective proof-of-authority verification,
- the confirmation transaction, the measurement data transaction, and the test control transaction are stored in a respective data block of a block chain,
- additional/meta data is stored for testing in a confirmation transaction, and
- the respective data block includes the respective proof-of-authority verification of the corresponding transaction.

2. The computer-implemented method of claim 1, wherein, depending on the test result, a reset signal (42) is provided for the subsystem, or the control function provides a reset signal (42) for the subsystem depending on the test result.

3. The computer-implemented method of any one of claims 1 or 2, wherein, depending on the test result, a feedback signal (40) is provided for the subsystem, or the control function provides a feedback signal (40) for the subsystem depending on the test result.

4. The computer-implemented method of any one of the preceding claims, wherein
- the network application is executed in a peer-to-peer network (1) or is executed by the peer-to-peer network (1),
- in particular, the peer-to-peer network (1) is a private network.

5. The computer-implemented method of any one of the preceding claims, wherein the proof-of-authority verification (10) has at least a time-limited validity period.

6. The computer-implemented method of any one of the preceding claims, wherein the proof-of-authority verification (10) has at least one content validity.

7. The computer-implemented method of any one of the preceding claims, wherein the proof-of-authority verification (10) has at least one user-related validity.

8. The computer-implemented method of any one of the preceding claims, wherein a data block (4a, 4b, 4c) is configured as a smart contract providing the proof-of-authority verification (10) if a predetermined condition is met.

9. The computer-implemented method according to any one of the preceding claims, wherein a healing function is provided for altering and/or identifying at least one of the data blocks (4a, 4b, 4c).

## Revendications

1. Procédé mis en œuvre par ordinateur pour le contrôle d'un système technique, pour un suivi de conformité, comprenant les étapes suivantes :
- le chargement et/ou l'exécution d'une transaction de commande de test, dans lequel
∘ la transaction de commande de test comprend un contrat intelligent ou est un contrat intelligent,
∘ un signal de déclenchement de test (37) demande le chargement et l'exécution de la transaction de commande de test,
∘ en particulier, la transaction de commande de test est chargée à partir d'une application de réseau,
∘ la transaction de commande de test comprend des instructions de commande et des données de référence ;
- le pilotage d'un module de test, dans lequel
∘ les instructions de commande pilotent le module de test de telle sorte qu'un signal de test est généré pour un sous-système du système technique ;
- l'acquisition de données de mesure pour le sous-système en réponse au signal de test, dans lequel
∘ les données de mesure sont acquises par le module de test,
∘ en particulier, les données de mesure sont acquises par un capteur du module de test ;
- le calcul d'un résultat de contrôle, dans lequel
∘ sur la base des données de mesure et des données de référence, un résultat de contrôle est calculé,
- le pilotage du système technique en fonction du résultat de contrôle et/ou l'exécution d'une fonction de commande en fonction du résultat de contrôle.
dans lequel
- le résultat de contrôle est enregistré dans une transaction de confirmation,
- les données de mesure sont enregistrées dans une transaction de données de mesure,
- le résultat de contrôle est calculé sur la base des données de mesure de la transaction de données de mesure,
- la transaction de confirmation, la transaction de données de mesure et la transaction de commande de test sont sécurisées au moyen d'une preuve d'autorité respective,
- la transaction de confirmation, la transaction de données de mesure et la transaction de commande de test sont mémorisées dans un bloc de données respectif d'une chaîne de blocs,
- des données supplémentaires et/ou métadonnées concernant le contrôle sont enregistrées dans une transaction de confirmation, et
- le bloc de données respectif comprend la preuve d'autorité respective de la transaction correspondante.

2. Procédé mis en œuvre par ordinateur selon la revendication 1, dans lequel, en fonction du résultat de contrôle, un signal de réinitialisation (42) pour le sous-système est fourni, ou la fonction de commande fournit, en fonction du résultat de contrôle, un signal de réinitialisation (42) pour le sous-système.

3. Procédé mis en œuvre par ordinateur selon l'une des revendications 1 ou 2, dans lequel, en fonction du résultat de contrôle, un signal de rétroaction (40) pour le sous-système est fourni, ou la fonction de commande fournit, en fonction du résultat de contrôle, un signal de rétroaction (40) pour le sous-système.

4. Procédé mis en œuvre par ordinateur selon l'une des revendications précédentes, dans lequel
- l'application de réseau est exécutée dans un réseau de pair à pair (1) ou est exécutée par le réseau de pair à pair (1),
- en particulier, le réseau de pair à pair (1) est un réseau privé.

5. Procédé mis en œuvre par ordinateur selon l'une des revendications précédentes, dans lequel la preuve d'autorité (10) présente au moins une durée de validité limitée dans le temps.

6. Procédé mis en œuvre par ordinateur selon l'une des revendications précédentes, dans lequel la preuve d'autorité (10) présente au moins une validité quant au contenu.

7. Procédé mis en œuvre par ordinateur selon l'une des revendications précédentes, dans lequel la preuve d'autorité (10) présente au moins une validité liée à l'utilisateur.

8. Procédé mis en œuvre par ordinateur selon l'une des revendications précédentes, dans lequel un bloc de données (4a, 4b, 4c) est configuré sous la forme d'un contrat intelligent qui, lors de la survenance d'une condition prédéterminée, fournit la preuve d'autorité (10).

9. Procédé mis en œuvre par ordinateur selon l'une des revendications précédentes, dans lequel une fonction de correction est prévue pour modifier et/ou marquer au moins l'un des blocs de données (4a, 4b, 4c).
